(19) Europäisches Patentamt
European Patent Office
Office européen des brevets

(11) **EP 3 965 021 B1**

(12) **EUROPEAN PATENT SPECIFICATION**

(45) Date of publication and mention
of the grant of the patent:
**20.12.2023 Bulletin 2023/51**

(21) Application number: **20194915.3**

(22) Date of filing: **07.09.2020**

(51) International Patent Classification (IPC):
***G06N 3/08*** *(2023.01)* ***G06N 3/04*** *(2023.01)*

(52) Cooperative Patent Classification (CPC):
**G06N 3/084; G06N 3/048**

(54) **A METHOD OF USING CLUSTERING-BASED REGULARIZATION IN TRAINING A DEEP NEURAL NETWORK TO CLASSIFY IMAGES**

VERFAHREN ZUR CLUSTERING-BASIERTER REGULARISIERUNG ZUM TRAINIEREN EINES TIEFEN NEURONALEN NETZES ZUR KLASSIFIZIERUNG VON BILDER

PROCÉDÉ UTILISANT UNE RÉGULARISATION BASÉE SUR UN PARTITIONNEMENT DANS LA FORMATION D'UN RÉSEAU NEURONAL PROFOND POUR CLASSER DES IMAGES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**09.03.2022 Bulletin 2022/10**

(73) Proprietor: **FUJITSU LIMITED
Kanagawa 211-8588 (JP)**

(72) Inventors:
• **KASIOUMIS, Theodoros
Uxbridge UB8 3BL (GB)**
• **INAKOSHI, Hiroya
Hayes UB3 4AZ (GB)**

(74) Representative: **Haseltine Lake Kempner LLP
Cheapside House
138 Cheapside
London EC2V 6BJ (GB)**

(56) References cited:
**US-A1- 2019 392 323**

• **CHUNYANG WU ET AL: "Improving Interpretability and Regularization in Deep Learning", IEEE/ACM TRANSACTIONS ON AUDIO, SPEECH, AND LANGUAGE PROCESSING, IEEE, USA, vol. 26, no. 2, 1 February 2018 (2018-02-01), pages 256-265, XP058385010, ISSN: 2329-9290, DOI: 10.1109/TASLP.2017.2774919**
• **TAEJONG JOO ET AL: "Regularizing activations in neural networks via distribution matching with the Wasserstein metric", ARXIV.ORG, CORNELL UNIVERSITY LIBRARY, 201 OLIN LIBRARY CORNELL UNIVERSITY ITHACA, NY 14853, 13 February 2020 (2020-02-13), XP081598753,**
• **YANG QING ET AL: "Joint Regularization on Activations and Weights for Efficient Neural Network Pruning", 2019 18TH IEEE INTERNATIONAL CONFERENCE ON MACHINE LEARNING AND APPLICATIONS (ICMLA), IEEE, 16 December 2019 (2019-12-16), pages 790-797, XP033719659, DOI: 10.1109/ICMLA.2019.00139 [retrieved on 2020-02-13]**

**EP 3 965 021 B1**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Embodiments relate to a method of training a deep neural network (DNN) to classify data.

State-of-the-art deep learning classification models contain millions and sometimes billions of parameters, which results in very complex decision boundaries. The decision boundaries of deep learning models form high dimensional manifolds, which are impossible to visualize. Moreover, by having many parameters there is an increased risk of overfitting. Overfitting is normally detected by inspection at train-test error/accuracy, but looking just at the accuracy for model selection is not always appropriate: in some cases it is essential for a machine learning model to be a faithful approximator of human-like reasoning, even if it is less accurate than the state-of-art model trained for the same task.

It is therefore desirable that DNNs are trained so as to achieve a desired degree of sparsity in activations. Sparsity in activations is associated with faster learning and reduced memory requirements. For example, it allows unimportant neurons to be pruned, making deep neural networks easier to embed into mobile devices.

It has also been hypothesized that sparsity of neuron activations is a desirable property for a self-explainable model, since it may result in more interpretable representations. It is well known that, in convolutional neural networks, sparsity constraints on filters force them to mimic the mammalian visual cortex area V1 and V2. Additionally, sparsity may enhance the performance and interpretability of rule extraction logic programs because sparsity induces fewer rules without sacrificing the accuracy. It may be argued that a smaller number of rules is easier to interpret by a human, and therefore they explain better and in a more compact manner the decisions made by a neural network.

Interpretable machine learning models are desirable in many real-life scenarios, including critical areas like healthcare, autonomous driving and finance, where models should explain their decision-making process, otherwise they are not trusted. For example, explaining the decision-making process of a neural network may assist doctors in making a better judgement of patient condition and mitigate human errors.

In classic convolutional neural networks (CNNs), a filter may fire in response to multiple object parts of the input image and also in many cases the importance region of activation is quite large. This makes it hard to assess the cause of activation of a filter and also hinders interpretability. Furthermore, in classic CNNs it is often the case that an image is related with high activations for many filters and this absence of sparsity in activations makes it even more difficult to explain the decision-making process of a CNN based on its filter activities. Therefore, linking neurons (or clusters of neurons) to specific object parts may be considered to be a desirable step towards explaining the decisions made by a neural network based on its neuron activities.

One way to train more interpretable models is to enforce some kind of clustering in the filter/neuron space. The main idea is to encourage filters/neurons to form groups that fire in response to common object parts or patterns present in a specific class or shared between classes. Each neuron/filter may then be associated with a specific object part or topic after a labelling process which could be manual or automated. Neurons with regions of high activation are more important in describing the decisions made by the model, and these activations may be utilized by rule extraction programs to explain a particular decision made by the complex model, enhancing the interpretability of the learned representations while maintaining fidelity.

Many supervised approaches that associate filters to specific object parts by utilizing object part annotations have been proposed. However, such detailed data is too expensive to acquire because it needs a lot of labelling work, and the vast majority of data does not come with such annotations. Therefore, it would be very useful to train models in an unsupervised fashion (without object part annotations) and teach theirfilters to be interpretable by representing specific object parts.

One previous proposal associates filters to specific object parts by introducing an additional penalty called 'filter loss' in the objective function that assigns each filter f to the category c whose images activate filter f the most. Their loss is expressed in terms of mutual information between feature maps and some templates, and forces each filter f to represent a specific object of category c and keep silent on other categories, i.e. each filter will be associated with one class. This means, for example, that there might be different filters firing for 'tail of dog', 'tail of cat' or 'tail of bird', leading to redundant representations, instead of having a unified filter to represent 'tail' that may activate on multiple classes at the same time. It is evident that, while this method succeeds in disentangling representations and linking filters to objects of specific classes, it does not encourage parsimonious representations (sparsity) which is something that may help reduce the redundancy in representations.

Some regularization approaches have been proposed to realize sparse activations, but none of them achieves at the same time clustering of the filter space (e.g. filters representing object parts or topics) and sparse representations.

Reference may be made to any of: CHUNYANG WU ET AL: "Improving Interpretability and Regularization in Deep Learning", IEEE/ACM TRANSACTIONS ON AUDIO, SPEECH, AND LANGUAGE PROCESSING, IEEE, USA, vol. 26, no. 2, 1 February 2018 (2018-02-01), pages 256- 5 265, ISSN: 2329-9290, DOI: 10.1109/TASLP.2017.2774919;

US 2019/392323 A1, which relates to neural network acceleration and embedding compression systems and methods with activation sparsification;

TAEJONG JOO ET AL: "Regularizing activations in neural networks via distribution matching with the Wasserstein metric", ARXIV.ORG, CORNELL UNIVERSITY 10 LIBRARY, 201 OLIN LIBRARY CORNELL UNIVERSITY ITHACA, NY 14853, 13 February 2020 (2020-02-13); and

YANG QING ET AL: "Joint Regularization on Activations and Weights for Efficient Neural Network Pruning", 2019 18TH IEEE INTERNATIONAL CONFERENCE ON MACHINE LEARNING AND APPLICATIONS (ICMLA), IEEE, 16 December 2019 (2019- 15 12-16), pages 790-797, DOI: 10.1109/ICMLA.2019.00139.

The present invention is defined by the independent claims, to which reference should now be made. Specific embodiments are defined in the dependent claims.

There is disclosed herein as a first aspect a computer-implemented method of training a deep neural network - DNN - to classify data, which is in image form, the method comprising: for a batch of N training data $X_i$, where $i$ = 1 to N and $c_i$ is the class of training data $X_i$, carrying out during training of the DNN a clustering-based regularization process at at least one layer $l$ of the DNN having neurons $j$, in which process a regularization activity penalty is added to a loss function for the batch of training data which is to be optimized during training, whereby the regularization activity penalty comprises components associated with respective neurons in the layer which are dependent on the respective classes of the training data.

The clustering-based regularization process comprises, before adding the regularization activity penalty, obtaining a prior probability distribution over neuron activations for each class. The regularization activity penalty is structured to induce activations of neurons to converge to the prior probability distribution.

The prior probability distribution is a sparse distribution in which only a low proportion of neurons in the layer are activated for the class.

The prior probability distributions of at least some classes may intersect.

Embodiments provide presents clustering-based regularization techniques to train more interpretable filters in a convolutional neural network (CNN), or more interpretable neurons in a Feed Forward Neural Network (FFNN) in general, while achieving a desired degree of sparsity in activations at the same time. It is therefore possible for the DNN to learn more quickly. Furthermore, it allows unimportant neurons to be pruned, thereby reducing memory requirements for the DNN.

The proposed methods encourage each filter of a convolutional layer to represent an object part or concept, without the need for object part annotations. This is accomplished by imposing penalties on filter activations using the ground truth labels of each image/sample as a supervisory signal. After training with the proposed methods, the activation region of filters is small and compact, hence after a labelling process (which could be manual or automated) each filter/neuron may be associated with a specific object part or concept. This results in more interpretable filter/neuron activities, which is a significant step towards explainability in Artificial Intelligence.

The proposed methods may also be used for transfer learning, where a machine learning model is trained on one domain and then may be applied to another domain with little or no additional training. By utilizing the learned interpretable representations, less data are required to train the model, therefore lowering the cost for a business to obtain big data.

In one embodiment, the clustering-based regularization process may comprise calculating, for each neuron, the component of the regularization activity penalty associated with the neuron, the amount of the component being determined by the probabilities of the neuron activating according to the prior probability distributions $p_{jci}$. The component of the regularization activity penalty may be calculated using the formula:

$$\sum_{i=1}^{N}(1 - p_{jc_i})A_{ij}^{(l)}$$

where $A_{ij}^{(l)}$ is the activation of neuron j in layer $l$ for training data $Xi$.

The regularization activity penalty $R(W_{1:l})$ may be calculated using the formula:

$$R(W_{1:l}) = \sum_{i=1}^{N}\sum_{j=1}^{C_l}(1 - p_{jc_i})A_{ij}^{(l)}$$

where $W_{1:l}$ denotes the set of weights from layer 1 up to $l$.

In another embodiment, the clustering-based regularization process may comprise, before adding the regularization activity penalty, determining the prior probability distribution for each class at each iteration of the process.

Determining the prior probability distribution for each class may comprise using neuron activations for the class from previous iterations to define the probability distribution.

The clustering-based regularization process may further comprise using the determined prior probability distribution to identify a group of neurons for which the number of activations of the neuron for the class meets a predefined criterion.

The predefined criterion may be at least one of: whether, when the neurons are ranked according to the number of activations of the neuron for the class from the prior probability distribution, the neuron is ranked within the top K neurons, where K is an integer; and whether the number of activations of the neuron for the class from the prior probability distribution exceeds a predefined activation threshold.

The regularization activity penalty may comprise penalty components calculated for each neuron outside the group but no penalty component for the neurons within the group.

Alternatively, the regularization activity penalty may comprise penalty components calculated for each neuron in the layer, the amount of the penalty component for neurons outside the group being greater than for neurons within the group. In the clustering-based regularization process the neurons may be ranked according to the number of activations of the neuron for the class from the prior probability distribution. The penalty component for each neuron may be inversely proportional to the ranking of the neuron.

Embodiments of the method may further comprise determining the saliency of the neurons in the layer and discarding at least one neuron in the layer which is less salient than others in the layer. That is, as mentioned above, unimportant neurons may be pruned.

Embodiments of the method may further comprise applying a weight regularization technique to the layer after carrying out the clustering-based regularization process.

A rule extraction technique may be applied to the DNN after training is complete to obtain rules explaining the activity of the neurons. That is, the proposed method may be combined with a post-hoc rule extraction program (for example, but not limited to, that proposed in EP3291146) to achieve better and more interpretable rules. Sparsity in activations may improve the interpretability, because fewer filters/neurons will fire on a specific image/sample. Using sparse activations, rule extraction programs may produce fewer rules which are more interpretable, while maintaining high fidelity.

As mentioned above, a manual or automated neuron labelling process may be applied to the DNN after training is complete to associate neurons with a specific object part or concept.

In a particular implementation, a method according to an embodiment may be used to train a DNN for use in controlling a semi-autonomous vehicle. For example, in an instance of transfer learning, a CNN trained using a method according to an embodiment to recognize traffic signs using a dataset comprising images of traffic signs from one country may be more readily trained to recognize traffic signs from another country than CNNs trained using a different method.

There is disclosed herein as a second aspect a computer program or a computer program product comprising instructions which, when executed by a computer, cause the computer to carry out any of the methods/method steps described herein, or a non-transitory computer-readable medium comprising instructions which, when executed by a computer, cause the computer to carry out any of the methods/method steps described herein.

There is disclosed herein as a third aspect an apparatus to train a deep neural network - DNN - to classify data, which is in image form, the apparatus comprising at least one processor, and at least one memory to store the DNN, the data to be classified, and instructions to cause the processor to: for a batch of N training data $X_i$, where i = 1 to N and $c_i$ is the class of training data $X_i$, carry out a clustering-based regularization process at at least one layer *l* of the DNN having neurons j, in which process a regularization activity penalty is added to a loss function for the batch of training data which is to be optimized during training, whereby the regularization activity penalty comprises components associated with respective neurons in the layer which are dependent on the respective classes of the training data.

Reference will now be made, by way of example, to the accompanying drawings, in which:

Figure 1 is a flowchart of a computer-implemented method of training a DNN to classify data according to an embodiment;
Figure 2 is a diagram illustrating layer architecture employing a first proposed regularization process;
Figure 3A shows an exemplary probability distribution over filter activations for each of three classes, and Figure 3B shows a prior distribution of penalties applied to filters during training, according to the probability distribution of filter activations shown in Figure 3B;
Figure 4 is a diagram depicting neurons in a layer subjected to the first proposed regularization process;
Figure 5 is a diagram illustrating a second proposed regularization process;
Figure 6 shows a uniform prior distribution over filter activations for three classes;
Figure 7 shows the distribution of mean filter activations for images of each class using the second proposed regularization process;
Figure 8 illustrates high activations of filters which are trained to highly activate for the three respective classes by the specified uniform prior distribution of Figure 6;
Figure 9 is a table depicting mean filter activations before finetuning a CNN using the first proposed regularization process;

Figure 10 is a table depicting mean filter activations after finetuning the CNN using the first proposed regularization process;

Figures 11 and 12 show tables relating to rules extracted from the trained CNN;

Figure 13 are plots of the average values of filter activations for all images of a given category after application of the second proposed regularization method;

Figures 14A to 14D are visualizations of high activations in some filters trained on the CUB200-2011 dataset;

Figure 15 shows the architecture of a CNN;

Figure 16 illustrates two exemplary training datasets;

Figure 17 is a flow diagram depicting steps during forward and backward pass using the first proposed regularization process;

Figure 18 is a diagram of components involved in the first proposed regularization process;

Figure 19 is a flow diagram depicting steps during forward and backward pass using the second proposed regularization process;

Figure 20 is a diagram of components involved in the second proposed regularization process;

Figure 21A illustrates a dense probability distribution and Figure 21B illustrates a sparse probability distribution;

Figure 22 is a diagram showing toy architecture of a CNN to be trained on a first exemplary dataset;

Figure 23 is a diagram showing toy architecture of a CNN to be trained on a first exemplary dataset;

Figure 24 show images for use in explaining an application of an embodiment; and

Figure 25 is a block diagram of a computing device suitable for carrying out a method according to an embodiment.

## Overview

This proposal aims to tackle the aforementioned inefficiencies in a unified approach. The goal is to train more interpretable filters/neurons and encourage them to cluster and fire in response to small and semantically meaningful regions by introducing sparsity in activations so that these regions may be associated with specific object parts in a separate labelling process after the fact. This clustering is accomplished without the use of specific object part annotations, using instead only the ground truth label of each sample as the supervisory signal, making the method broadly applicable.

As described earlier, a previous proposal associates filters to specific object parts by an appropriate 'filter loss'. However, the proposed loss may cause redundancy in representations, training different filters for each class for the same concept (e.g. instead of learning general concept of 'tail' they learn 'tail of cat', 'tail of dog', etc.), especially if the model has high capacity for the problem to be solved. The method proposed in this application aims to tackle this inefficiency by introducing sparsity in representations. By encouraging parsimonious representations, the filters will be induced to capture the most discriminative information and hopefully avoid the redundancy problem.

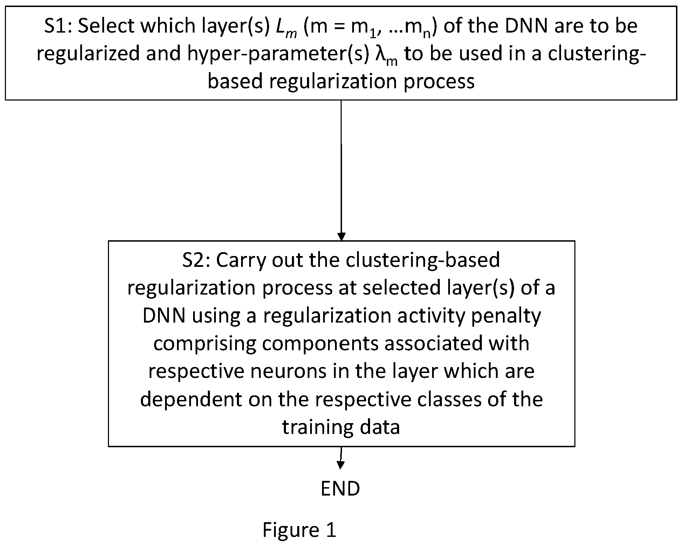

Figure 1 is a flowchart of a computer-implemented method of training a DNN to classify data (in image form) in accordance with an embodiment. Step S1 comprises selecting which layer or layers $L_m$ (m = $m_1$, ...$m_n$) of the DNN is/are to be regularized and hyper-parameter(s) $\lambda_m$ to be used in a clustering-based regularization process (these may be input by a user). Step S2 comprises carrying out, for a batch of N training data $X_i$, where $i$ = 1 to N and $c_i$ is the class of training data $X_i$, the clustering-based regularization process at the selected layer(s) $l$ of the DNN during training of the DNN. In the regularization process, a regularization activity penalty is added to a loss function for the batch of training data which is to be optimized during training. The regularization activity penalty comprises components associated with respective neurons in the layer which are dependent on the respective classes of the training data.

For example, at the forward pass penalties $R_m(W_{1:m})$ are computed for each layer according to an algorithm to be used for the layer (as explained later). After reaching the classification head, the loss to minimize is

$$L_{CE} + \sum_m \lambda_m R_m(W_{1:m}).$$

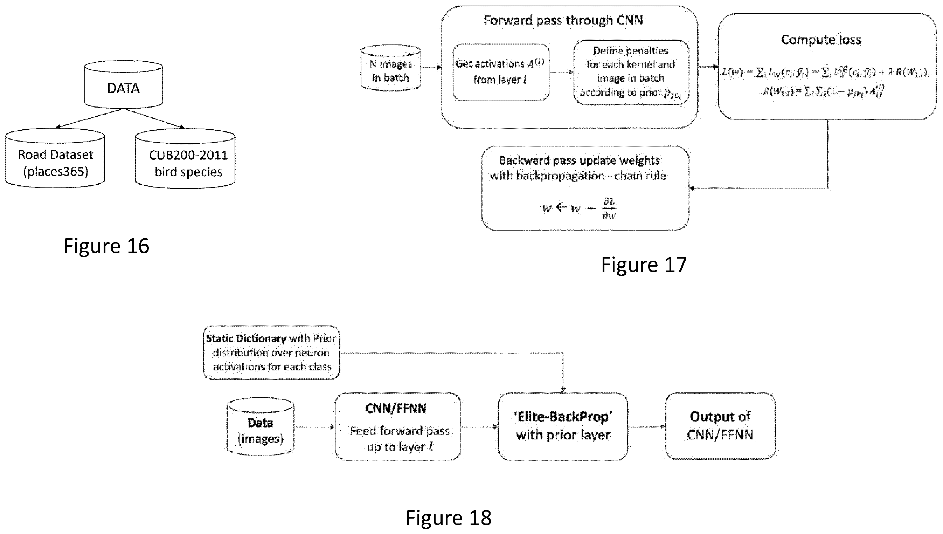

Gradients are computed and then the parameters are updated at backward pass. This process can be repeated many times (num_batch)x(num_epochs). The general idea is captured by Figures 17, 18, 19 and 20 for one layer penalization, but can be trivially extended to be applied simultaneously to multiple layers.

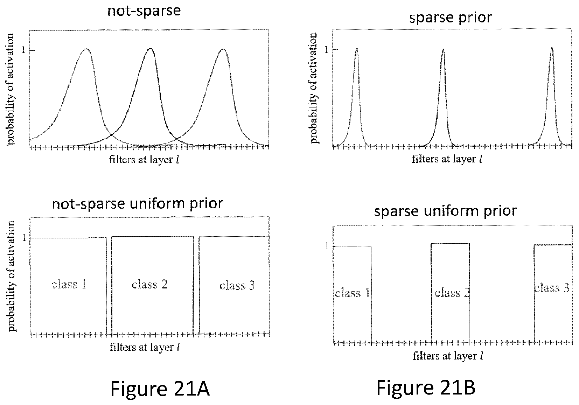

In the present application, in a first algorithm, hereafter "algorithm 1" or "Elite-BackProp with prior distribution", for each class a prior distribution over filter activations is imposed that leads to a semantically meaningful clustering of the filter space. By allowing the prior distributions of different classes to intersect, concepts shared between the classes may be modelled (e.g. intuitively learn only one filter for the concept of head instead of one filter per class). Moreover, by imposing sparse prior distributions, such as that shown in Figure 21B, a desirable degree of sparsity in filter activations may be achieved, in order to reduce the redundancy in representations (i.e. the same abstract concept, e.g. "head", being represented by different filters).

The "Elite-BackProp with prior distribution" algorithm is supervised, in the sense that it is necessary to manually define for each class a prior distribution over filter activations. Although simple prior distributions like uniform or Gaussian are easy to construct, defining more complex prior distributions may be more difficult, because as the number of classes increases the possibilities increase combinatorially. Questions like "how many filters should be highly active for different classes" may be difficult to answer a *priori.* Moreover, a 'wrong' prior distribution may still cause redundancy in filter activations. For example, if the model has high capacity for the problem at hand, then a sparse prior distribution would be appropriate, but if a dense prior distribution is defined, such as that shown in Figure 21A, then redundancy in representations would be expected.

To tackle the aforementioned issues a second algorithm, hereafter "algorithm II" or "Elite-BackProp topK", is proposed, in which the topK activations for each class, called the 'Elite', are rewarded and all other filters outside the 'Elite' of the class are penalized. For each class the 'Elite' is defined during training in a completely unsupervised way from the history of activations. Essentially the filters are ranked according to their activations, and any filter outside the 'Elite' will be penalized according to its ranking: a lower rank results in bigger penalty. The proposed method is not limited to defining an 'Elite' for each class, but different approaches using thresholding (instead of ranking) may be utilized. Furthermore, it is also possible to penalize every filter with a penalty inversely proportional to its ranking (i.e. penalize the 'Elite' also by a small amount). Therefore, each class is associated with a distribution of penalties for each filter, which may be regarded as equivalent to imposing a prior distribution over filter activations. The "Elite-BackProp topK" algorithm tackles the redundancy problem by encouraging parsimonious representations in a completely unsupervised manner without the need to manually define a prior distribution.

After training with the proposed regularization methods, the filters/neurons will be more interpretable because they will have high activation regions on meaningful parts/objects of the input image and sparse activity. An optional step may be to discard unimportant neurons (low magnitude) by pruning them, for speed and memory benefits. Later on, a labelling process may follow (which may be either manual or automated) in order to associate every filter with a particular word describing its activation. This is done by visualizing the receptive field of high activations of filters across different images or in an unsupervised fashion using few-shot learning techniques.

Additionally, a rule extraction logic program (such as, but not limited to, that proposed in EP3291146A) may be used after training with the proposed regularization, to distil the knowledge of the interpretable neural model and explain its decisions. Any other existing or future method which maps filters/neurons to literals and generates classification rules over those literals may also be used. Most rule extraction programs take as input the activations of filters from a subset of layers and measure the association with the target output. After associating filters with literals, rules are created to explain a particular decision, boosting the interpretability of the underlying representations. This may be very beneficial in some domains, such as healthcare where doctors need to know the decision-making process of the model and not only the output classification. For example, in detecting tumours or other diseases from images, it will be beneficial to have access to a neural network whose filters 'fire' on semantically meaningful regions of the image that help diagnose if a disease is present.

In summary, this proposal aims to train networks in such a way that filters/neurons represent semantically meaningful object parts or concepts, not necessarily associated with one specific class, by introducing sparsity in activations through two clustering-based regularization methods that use the ground truth labels of each sample as a supervisory signal. The proposed methods encourage parsimonious representations and make the activation region of each filter small and compact, making it easier to associate its activation with an object part in a separate labelling process. Last but not least, the sparsity inducing nature of the proposed methods may be combined with pruning for speed and memory benefits, making it easier to embed deep neural networks in mobile devices.

## Detailed Description of the Invention

The methods described in the present application are implemented in Tensorflow™, but any other deep learning framework, such as Pytorch™ or Caffe™, may be used.

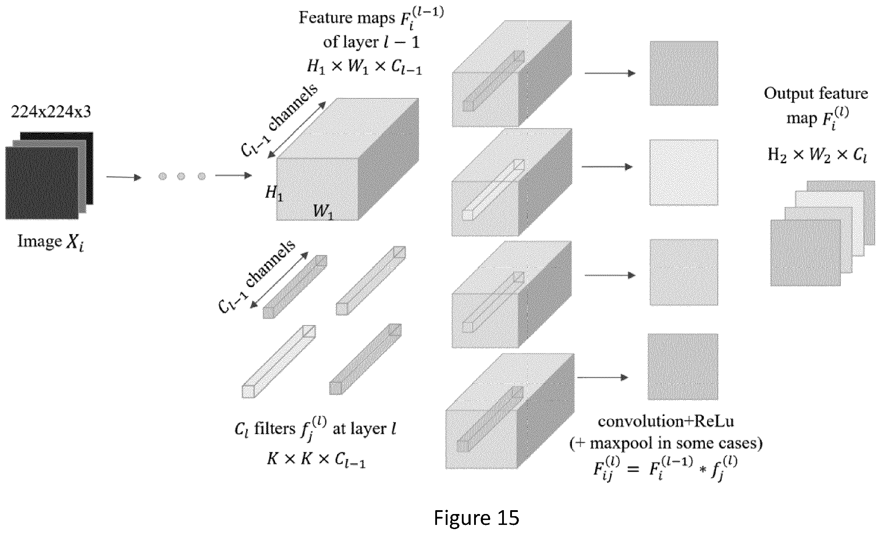

This proposal presents two regularization methods to realize clustering and sparsity in activation. The proposed methods are described for convolutional neural networks, such as that illustrated in Figure 15, but the same reasoning holds true in any architecture by replacing 'filters' with 'neurons' in the logic. That is, where the data to be classified is in the form of images a CNN is appropriate, but data in general tabular form classified by a Feed Forward Neural Network (FFNN) may be used also with the proposed regularization approach.

Before explaining the proposed methods, some necessary preliminaries are discussed and the notation for the rest of this proposal is set out (the 'Glossary' at the end of the description should also be referred to).

The proposed clustering-based regularization method is to be applied at a layer *l* of a CNN that consists of *J* filters $\left\{ f_1^{(l)}, ..., f_J^{(l)} \right\}$. Let *C* denote the total number of classes for the classification problem at hand and let $c_i$ denote the ground truth label/class for an image $X_i$ in the dataset. Furthermore, let B denote the total number of batches of images and let each batch contain N images.

Given a batch $\{X_1, \dots, X_N\}$ of images, let $F_i^{(l)} = (F_{i1}^{(l)}, F_{i2}^{(l)}, \dots, F_{iJ}^{(l)})$ stand for the feature map (also known as activations) output of the l-th layer for the *i*-th image in the batch. Each $F_{ij}^{(l)}$ for $j = 1, \dots, M, j = 1, \dots, J$ is a 2D matrix of activations that is defined as the convolution of the feature map of layer $l - 1$ with the *j*-th filter for *i*-th image in the batch, i.e.,

$$F_{ij}^{(l)} = F_i^{(l-1)} * f_j^{(l)}$$

where $*$ stands for the convolution operator followed by ReLu (and in some cases by maxpooling also, depending on the architecture) and $F_i^{(0)} = X_i$ is the input image.

For each filter $f_j^{(l)}$ we define a Bernoulli distribution Bern($p_{jc}$), where $p_{jc}$ denotes the probability of filter $f_j^{(l)}$ being 'active' for the class $c \in \{1, 2, \dots, C\}$. A filter $f_j^{(l)}$ is said to be 'active' for an image $X_i$ if the activation $A_{ij}^{(l)} > t$, where t is a specified threshold. For now, threshold *t* may be considered as the average of filter activations per class; how to find such a threshold will be described later.

**1. Algorithm I: "Elite-BackProp with prior distribution activations"**

**1.1. Method description in detail**

In this algorithm a prior distribution over filter activations in a layer is specified separately for each class. Then, a penalty is introduced in the loss function to encourage filters' activities to converge to the specified prior distribution. The intention is that a set of filters will 'fire' only for a specific class, discriminating this class from the others, and another set of filters may 'fire' for multiple classes, representing object parts shared between the classes. Moreover, by specifying a sparse prior distribution over filter activations, one may control the redundancy in representations. The filters/neurons are induced to localize meaningful objects for each class and this results in small and compact activation regions, boosting the interpretability of each filter/neuron and consequently making the model more interpretable.

The proposed method to accomplish this consists of penalizing filter activations that have lower probability of being active for a certain class, where low probability is measured in terms of the prior distribution that is chosen. For example, if filter $f_j$ has probability $p_{jc} = 1.0$ of being active for class c, then Penalty component = 0. If on the other hand a filter $f_j^{(l)}$ has probability $p_{jc} = 0.0$ of being active for class c, then Penalty component $= |A_{ij}^{(l)}|$. Since the activations are taken after a ReLu non-linearity, the absolute value is omitted. In case of other non-linearities that take negative values, like Leaky ReLu, tanh or sigmoid, the absolute value is necessary.

Generally, if an image $X_i$ is of class $c_i \in \{1, \dots, C\}$, and $p_{jc_i}$ is the specified prior distribution probability for class $c_i$ over filter activations, then the penalty that will be added to the loss for this image is

$$\text{Penalty} = (1 - p_{jc})A_{ij}^{(l)}. \qquad (1)$$

Therefore, the total penalty for activation of filter $f_j^{(l)}$ in the batch of N images will be

$$\sum_{i=1}^{N}(1 - p_{jc_i})A_{ij}^{(l)} \qquad (2)$$

and the total regularization penalty R($W_{1:l}$), taking into account all activations, is

$$R(W_{1:l}) = \sum_{i=1}^{N}\sum_{j=1}^{C_l}(1 - p_{jc_i})A_{ij}^{(l)} \qquad (3)$$

where $W_{1:l}$ denotes the set of weights from layer 1 up to $l$ and $C_l$ is the number of output channels of layer $l$.

Notice that the activations $A_{ij}^{(l)}$ are a function of all weights $W_{1:l}$. Therefore the proposed method implicitly regularizes all weights up to layer $l$ and encourages filters to cluster and have the incentive to represent specific object parts as specified by the prior distribution $p_{jc_i}$.

The loss function that we optimize during training takes the form

$$L_W(y, \hat{y}) = L_W^{CE}(y, \hat{y}) + \lambda\, R(W_{1:l})$$

where $L_W^{CE}(y, \hat{y})$ stands for the cross-entropy loss between the true and predicted label (any other loss may be used in place of cross-entropy, like hinge loss or Kullback-Leibler; for regression, the $L_1, L_2$ losses are common choices, but the present method is not restricted to using only those) and $\lambda$ controls the penalty ($\lambda$ is a small positive constant which is preset at initialization $\lambda$ based on expert knowledge or determined empirically, for example using cross-validation)$L_1, L_2$. The term $R(W_{1:l})$ acts as a regularization term, but one may use additional regularizers like the Ridge or Lasso. The purpose of $R(W_{1:l})$ is to encourage filters to form clusters, according to the specified prior distribution.

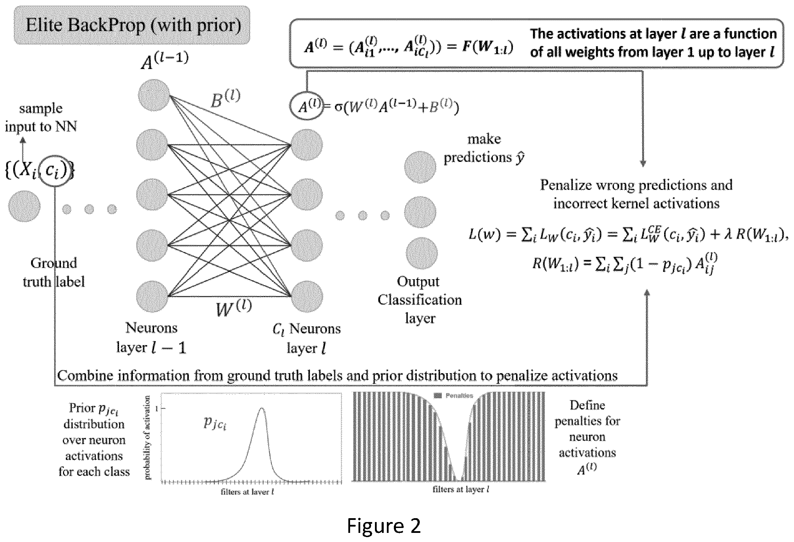

Figure 2 summarizes the idea behind the proposed first method, Figure 17 is a flow diagram depicting the steps during forward and backward pass, and Figure 18 is a diagram of components involved. The activations out of layer $l$ are penalized differently for each layer, according to the specified prior distribution $p_{jc_i}$. Filters are encouraged to represent specific object parts present in a specific class by penalizing their activations differently for each class, as specified by the prior distribution.

---

**Elite-BackProp Algorithm I:** Prior distribution of activation penalties

---

1: **Initialization:** Layer $l$ to apply regularization, regularization penalty $\lambda$, Prior probability distribution $p_{jc}$ over filter activations $f_j^{(l)}$ for each class $c$, Batch size.

2: **For** each batch:

3:    Initialize penalty R$(W_{1:l})$ =0

4:    **For** image $X_i$ in batch:

5:        Forward pass $X_i$ through CNN and compute activations $A_{ij}^{(l)}$ for each filter $f_j^{(l)}$ at $l$-th layer

6:        R$(W_{1:l})$ ← R$(W_{1:l})$ +$\sum_j (1 - p_{jc_i}) A_{ij}^{(l)}$,   where $c_i$ is the ground truth class of image $X_i$

7:    **End** For

8:    Penalize predictions with respect to: $L_W(y, \hat{y}) = L_W^{CE}(y, \hat{y}) + \lambda\, R(W_{1:l})$

9:    Update all parameters W at backward pass.

10: **End** For

### 1.2. Example

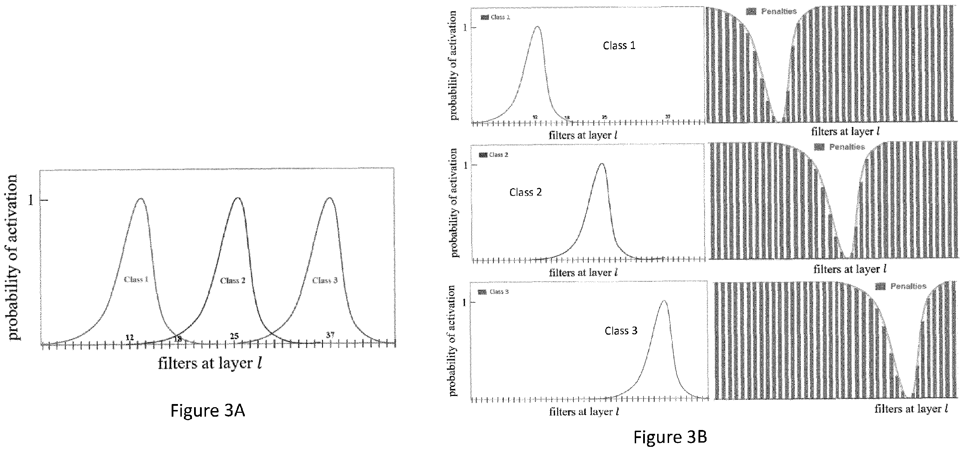

In this section a toy example is presented to depict the proposed idea of algorithm I in a clearer manner. Suppose that there is a three-class classification problem and the distribution shown in Figure 3A is specified over filter activations for each class. As shown, some filters have very high probability of being active for specific classes: filter 12 has high probability of being active for class 1, filter 25 for class 2 and filter 37 for class 3. Some filters are 'free' (not penalized) to be active for different classes, just like filter 18 which has equal probability of being active for classes 1 and 2.

It is possible to specify any desired prior distribution, and during training the filters are encouraged to have activations that resemble the prior distribution. The intuition is, as previously mentioned, to encourage filters into representing specific object parts by clustering according to the prior distribution. Therefore they cluster in order to either discriminate categories or to represent common topics shared between them.

How to 'teach' the filters to have activations according to the prior distribution will now be discussed, starting by looking at the distribution of filter activations for the 1st class. During training, if an image of class 1 has high activation for filters 25 or 37 at layer $l$, then a big penalty should be imposed. This is because filters 25, 37 should not be active for that class, according to the prior distribution. On the contrary, no penalty is imposed on the activation of filter 12, since according to the prior distribution filter 12 has very high probability of being active for class 1. Filter 16 should be penalized a little because the probability of being active for class 1 is not 1.0. Therefore, filter activations get penalties that are inversely proportional to the prior distribution of filter activations that has been specified. Figure 3B shows a prior distribution of penalties applied to filters during training, according to the prior distribution of filter activations for class 1, class 2 and class 3.

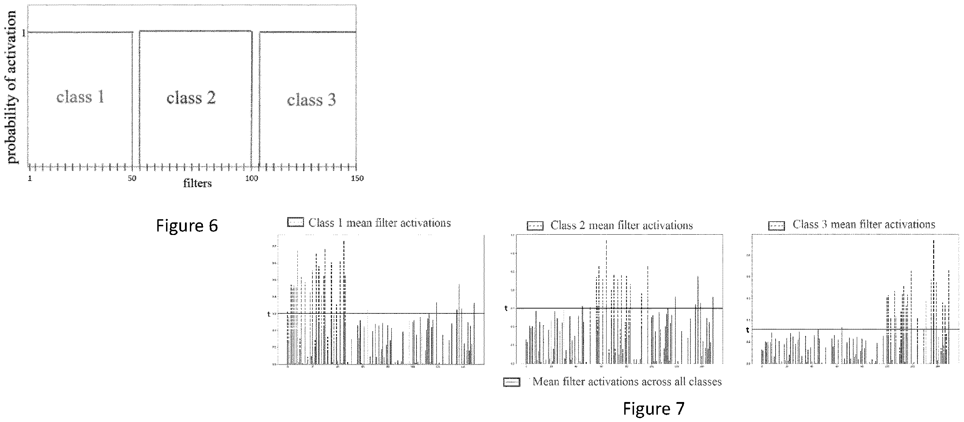

There is no restriction as to what prior distribution may be specified. For example, uniform prior distribution of filter activations may be specified, as shown in Figure 6. Notice that no filters are forced to represent common topics between different classes in this prior distribution. This does *not* imply that some topics will not be learned during training. For example if class 1 and class 2 share common topics/objects, but a 'bucket' of filters that intersects was not specified in the prior distribution, these common objects may still be learned from some filters: filters that activate for class 1 may learn this topic and filters that activate for class 2 may learn this topic. However, this introduces some redundancy in representations, since different filters will learn the same topic, but it is very common in neural networks.

### 1.3. Weight regularization after Elite-BackProp layer

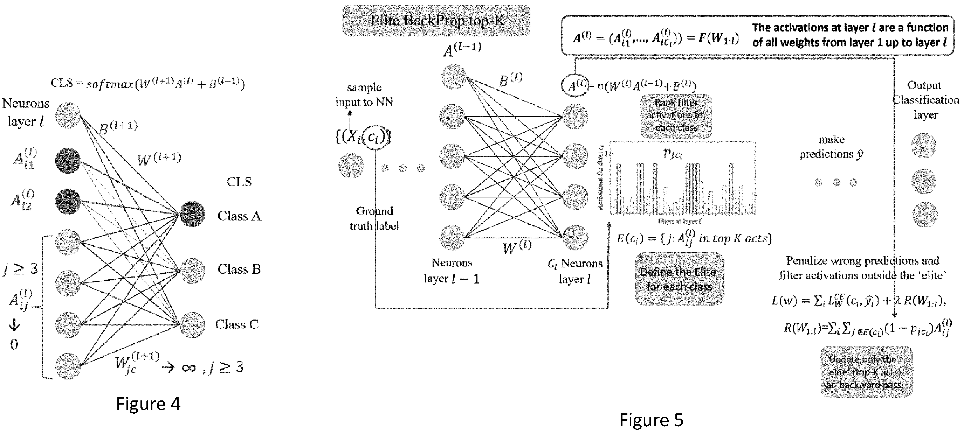

It is desirable to apply weight regularization (e.g. Ridge) on the layer following application of the Elite-BackProp algorithm, in order to keep weights constrained in a small Euclidean ball. The reason is that the proposed method penalizes activations according to a prior distribution (or an 'Elite' in algorithm II as described later). If no constraints are imposed then the model is free to learn arbitrary large weights in order to negate the regularization effect. This problem is depicted in Figure 4. Assuming the Elite-BackProp algorithm is imposed on layer $l$ and that imposed penalties on neuron activations for class A are as follows: All neuron activations except 1st and 2nd will be penalized, i.e., $A_{ij}^{(l)} \to 0$ for neurons-filters $f_j$, $j \geq 3$ in layer $l$. In this way high activations of neurons 1 and 2 are associated with class A (by penalizing all other neuron activities for images of class A). If no constraint is imposed on the weights $W^{(l+1)}$, then the model is free to learn arbitrary high weights to negate the effect of penalization, i.e., $W_{jc}^{(l+1)} \to \infty$, for $j \geq 3$.

In summary, activity penalization $A_{ij}^{(l-1)} \to 0$ by imposing the prior distribution could be potentially negated by the model if it learns $W_{jc}^{(l)} \to \infty$, where i indexes input images, $j$ indexes neurons-filters in layer $l$ and $c$ indexes output classes. However, if a constraint is imposed on the domain of $W^{(l)}$ in order to lie on a compact set, then it cannot get arbitrarily large to cancel the effect of the regularization penalty. Therefore an $L_2$ regularization penalty is imposed on the weights on the layer that follow Elite-BackProp. The $L_2$ constrains the $W^{(l)}$ to lie inside a Euclidean ball, where the radius of the ball is controlled by the regularization value: a bigger regularization value results in a smaller Euclidean ball.

In a post-processing step pruning techniques may be applied to remove unimportant filters. The 'importance' (aka saliency) of each filter/weight in a CNN/FFNN may be determined in terms of a metric (e.g. $L_p$, $L_{pq}L_p$, $L_{p,q}$ norms and group sparsity ones) and the filters may be sorted according to that metric. Afterwards, the least important filters/weights may be discarded by zeroing their effect, and the pruned network may be finetuned (re-trained) in order to converge to a simpler function with minimum loss in accuracy. This process may be performed many times in an iterative fashion.

As mentioned earlier, it may be quite difficult to define a good prior distribution over filter activations for each class. In particular, defining the appropriate number of filters that should be active for different classes results in a separate combinatorial problem that might be too time-consuming to solve. Furthermore, a bad choice in prior distribution may still cause redundancy in representations, especially if the model has high capacity for the problem at hand.

To tackle these inefficiencies, an unsupervised method is proposed below to naturally define a 'prior distribution' and achieve parsimonious representations as well as clustering of filters towards semantically meaningful concepts.

### 2. Algorithm II: "Elite-BackProp top-K activations"

This section describes an unsupervised method to tackle the limitations of "Elite-BackProp with prior distribution activations" as described earlier. The main idea is to define for each iteration of the algorithm a natural 'prior distribution' over filters activations for each class. This prior distribution is not constant during training, but is updated by looking at the history of filter activations from all previous iterations. Filters that had high activations in the past for a class get rewarded whereas filters that had low activations get penalized. Consequently, this procedure constructs for each class at each iteration, a histogram of activations which may be regarded as a prior distribution on that iteration. One may choose to reward a subset of activations per class by a topK approach (i.e. rank the filters and reward the K highest activations, or equivalently penalize the least J-K) or by defining a threshold, but the proposed method is not limited to these approaches. The aim is to encourage parsimonious representations by rewarding a subset of filters (called 'Elite') in an unsupervised manner, in order to reduce redundancy and give them the incentive to focus on the most discriminative information.

The proposed second algorithm achieves activity sparsity as well as clustering in filter space using the ground truth label of each class as the supervisory signal. In this algorithm a prior distribution over filter activations for each class is not specified, but instead only a number K, that is used to pick an 'Elite' of filters that have high activations for that particular class during the training process without any supervision, is specified. This algorithm is described using a topK approach, but the proposed method is not limited to this.

The 'Elite' for each class is constructed as follows: at each forward pass, the top-K filter activations for each class are found and their activations are dynamically accumulated (for each filter and each class). All filters that do not belong to the 'Elite' of the corresponding class will get penalized at backward pass. This way, only the 'Elite' of filters-neurons will be active for each class after training, and this induces a desirable degree of sparsity that is controlled by K (higher K means less sparse) as well as clustering in the filter-neuron space. After training, some filters may belong to the 'Elite' of many classes, a situation that naturally occurs if the topic that is represented by the filter is shared between those classes.

The aim of this method is to induce sparsity by relying only on the 'Elite' of filters-neurons for each class to guide the classification. In this way, the 'Elite' filters have the incentive to represent only the top K most important objects/topics for each class in order to achieve good classification performance and are free to represent common objects shared between the classes or objects that discriminate the classes. Finally, filters that do not belong to any of the 'Elite' may later on be pruned for speed and memory benefits as a post-processing step and the remaining network may be finetuned.

Pruning techniques aim to first find the 'importance' (aka saliency) of each filter/weight in CNN/FFNN in terms of a metric (e.g. $L_p$, $L_{p,q}$ norms and group sparsity ones) and sort them according to that metric. Afterwards, they discard the least important filters/weights by zeroing their effect. Finally, finetuning (re-training) of the pruned network is conducted in order to converge to a simpler function with minimum loss in accuracy. This process may be performed many times in an iterative fashion.

### 2.1. Method description in detail

The Elite-BackProp topK method works as follows: at each forward pass and for each image $X_i$ in a batch, the activations from a layer $l$ are found where the regularization layer is applied. Let $c_i$ denote the ground truth class of image $X_i$ and let D be a dictionary with the target classes as keys and for each value a vector storing the activation of filters in an accumulative manner. The dictionary D is initialized as $C_l$-dimensional vector of zeroes for each class, where $C_l$ is the number of filters in layer $l$. At each iteration, after layer $l$ is reached during the forward pass, the activations $A_{ij}^{(l)}$ of filters $f_j^{(l)}$ are computed and the memory is dynamically updated:

$$D[c_i] \leftarrow D[c_i] + (A_{i1}^{(l)}, \dots, A_{iC_l}^{(l)}).$$

Each activation $A_{ij}^{(l)}$ is a real number and $(A_{i1}^{(l)}, \dots, A_{iC_l}^{(l)})$ denotes the $C_l$-dimensional vector of activations, hence '+' stands for vector addition. $D[c_i]$ stores a $C_l$-dimensional vector of all previous accumulated filter activations and it is dynamically updated by adding the new vector of activation at each iteration.

After updating the dictionary D the filters are ranked according to their activations and the 'Elite' of filters $E(c_i)$ is defined, i.e. the top-K filters with highest activations for class $c_i$. The activations of the 'Elite' will not get penalized, but any filter that does not belong to the class 'Elite' will get penalized at the backward pass, and that penalty is inversely proportional to the rank of the filter: lower rank $\rightarrow$ higher penalty. Figure 5, Figure 19, Figure 20 and the algorithm set out below explain the proposed method in detail.

---

**Elite-BackProp Algorithm II:** Unsupervised top-K activation clustering

---

1: **Initialization:** Select K$\leq C_l$, Dictionary D storing filter activations D[$c$]=$(0,\dots 0_{C_l})$ for each class $c = 1, \dots, C$ intialized with 0s, Dictionary storing Elite of filters for each class $E[c]$ =[], Batch size.

2: **For** each Batch:

3:　　**For** image $X_i$ in batch:

4:　　　　Forward pass $X_i$ and compute activations $A_{ij}^{(l)}$ for each filter $f_j^{(l)}$ at $l$-th layer

5:　　　　Update dictionary D with filter activations for the ground truth class $c_i$ of image $X_i$:

$$D[c_i] \leftarrow D[c_i] + (A_{i1}^{(l)}, \dots, A_{iC_l}^{(l)}),$$ where '+' denotes vector addition. Each D[$c_i$] is a $C_l$-dimensional vector holding all previous filter activations for each class.

6:　　**End** For

7:　　**For** each class $c$:

8:　　　　Store the indices of top-K accumulated activations for the class $c$ in $E[c]$,

9:　　　　Let $A_c^K$ be the value of the K-th accumulated activation in D[$c$] in descending order:

$$A_c^1 > A_c^2 > \cdots A_c^{K-1} > \boldsymbol{A_c^K} > A_c^{K+1} > \cdots A_c^{C_l}, \text{ where } A_c^r \in D[c], \ r = 1, \dots, C_l.$$

10:　　　　Define

$$p_{jc} = \begin{cases} 1, \text{if } j \in E[c], \\ 1 - \dfrac{D[c][j]}{A_c^K}, \text{otherwise} \end{cases}$$

　　　　where $D[c][j]$ denotes the accumulated activation for filter $f_j^{(l)}$ on class $c$.

11:　**End** For

12:　　$R(W_{1:l}) = \sum_i \sum_j (1 - p_{jc_i}) A_{ij}^{(l)}$

13:　　Penalize predictions with respect to: $L_W(y, \hat{y}) = L_W^{CE}(y, \hat{y}) + \lambda R(W_{1:l})$

14:　　Update all parameters W at backward pass.

15:　**End** For

It should be noted that in the proposed algorithm the Elite are not penalized, only all other neurons outside the Elite. However, the algorithm may be modified to penalize the Elite also by ranking the activations

$$A_c^1 > A_c^2 > \cdots A_c^{K-1} > \boldsymbol{A_c^K} > A_c^{K+1} > \cdots A_c^{C_l},$$

and then defining penalty $p_{jc} = 1 - \dfrac{D[c][j]}{A_c^1}$ , for every filter (Elite included). Note that the denominator is the maximum $A_c^1$ activation this time. Therefore, the proposed method is not limited to using an Elite, one could penalize all filters according to their activations of that class or define a threshold on which filters are to be penalized.

Just as for Algorithm I, "Elite-BackProp top-K activations" layer regularization should desirably be followed by

an $L_2$ regularizer on the weights (see section 1.3)

**Worked Examples**

Experiments using the proposed regularization approach and uniform prior distribution or topK were conducted on two datasets, Road Dataset obtained from Places365 (Zhou, B.; Lapedriza, A.; Khosla, A.; Oliva, A.; Torralba, A. Places: A 10 million image database for scene recognition, IEEE Trans. Pattern Anal. Mach. Intell. 2018, 40, 1452-1464) and the CUB200-2011 bird dataset (C. Wah, S. Branson, P. Welinder, P. Perona, and S. Belongie: The caltech-ucsd birds-200-2011 dataset, 2011), as referred to in Figure 16. The data is in form of images (therefore a CNN is more appropriate) or (in embodiments not covered by the claimed invention) in general tabular form (and hence a FFNN may be used also with our regularization approach).

**A. Road Dataset**

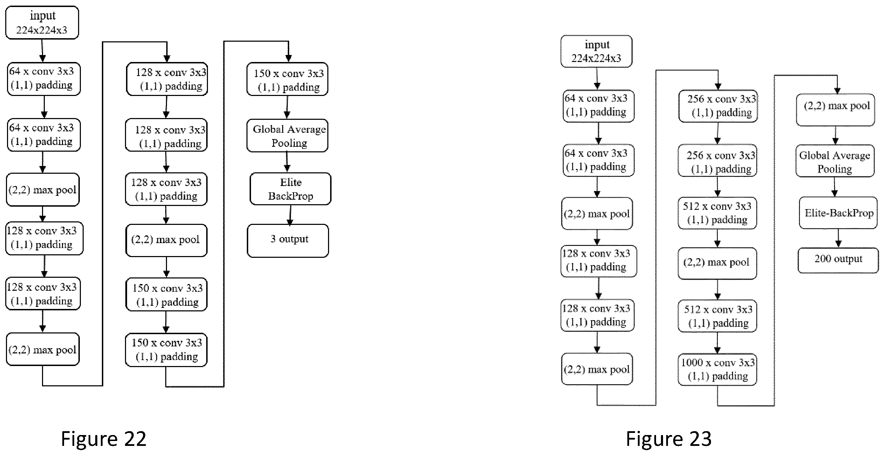

This dataset contains 3 categories ('forest road', 'highway', 'street') from the Places365 dataset and the goal is to classify road scenes. Scenes may be described through sub-objects and the topics present within them and that is why this toy dataset was chosen for testing the proposed method. The train-validation-test split chosen is 10,445 - 1,500 - 3,055 with 500 images per class for validation and roughly 1018 images per class for testing.
To standardize the data, for each item the per channel mean was subtracted and it was divided by the per channel standard deviation of images in Road dataset. Moreover, to augment the data, the following transformations were performed for each image: 50% chance of horizontal flip, 30% chance to change brightness, 20% chance for Gaussian blur, 35% chance to smooth, 20% chance to convert image to black and white and 30% chance to add salt and pepper noise.
The toy architecture for training on the ROAD dataset is described in Figure 22. The Tensorflow™ deep learning framework was used (but other DL frameworks, such as PyTorch™ or Caffe™, may be used instead) with the following parameters:

- Optimizer: the Adam algorithm with learning rate 0.00005, $\beta_1$ = 0.9, $\beta_2$ = 0.999, $\varepsilon$ = 1e-08.
- Learning rate on decay with fraction 0.5 and patience 5 epochs.
- Trained for 60 epochs.
- The regularization layer was attached after the GAP layer and a uniform prior distribution over the 150 filters activation was defined, as illustrated in Figure 6.
- As mentioned above it was also necessary to apply L2 weight regularization on the layer following the Elite-BackProp activity regularizer (see section 1.3). In this case L2 regularization with reg_val =0.01 was applied.

**A.1 Results after training using Elite-BackProp with activity prior distribution**

In this section quantitative and qualitative results on sparsity of activations and visualize activations regions of filters after training with Elite-BackProp with uniform and sparse prior distribution are reported.

**A.1.1. Training from scratch with Uniform prior distribution**

The architecture shown in Figure 22 was trained on the Road dataset using Elite-BackProp with the uniform prior distribution defined in Figure 6. The test accuracy was 86.57% and the validation accuracy 86%.
The mean filter activation per class was computed as follows: for each class in the test dataset, all images belonging to that class are passed through the CNN and the spatial mean of each filter after the last convolutional layer where the regularization was applied is recorded, i.e.

**For** each class c:

**For** each image $X_i$ in class c:

Compute $A_{ij}^{(l)}$ for each filter $f_j$ at layer $l$
**End For**

Compute $M_j^c = mean_i A_{ij}^{(l)} = \frac{1}{N_c} \sum_{i=1}^{N_c} A_{ij}^{(l)}$, where $N_c$ is the number of images in class c in test dataset. Therefore, the number $M_j^c$ is the mean activation of filter $f_j$ for images of class $c$ (dotted lines in Figure 7, see below).

**End For**

Figure 7 shows the distribution of mean filter activations for images of each class. As mentioned above, dotted lines denote the mean filter activations across images of a specific class. Continuous lines denote the mean filter activation across all images (for all classes). The horizontal line defined by t defines a global threshold for activation. In Figure 7 the mean filter activations $M_j^c$ across images of a given class are plotted with dashed lines and the mean filter activation across all images (for all classes) are plotted with solid lines, i.e. $\frac{1}{N} \sum_{i=1}^{N} A_{ij}^{(l)}$, where $\sum_c N_c = N$, the total number of images in the test dataset.

Note the deviation of filter activations of a specific class (dashed lines) from the mean activation of a filter across all classes. This clearly shows that filters 1-50 highly activate for class 1, filters 51-100 for class 2 and filters 101-150 for class 3.

A simple global threshold t=0.3 for a filter to be active may be manually specified, by visual inspection of activations in Figure 7. If the mean activation of j-th filter for the i-th image $X_i$ is below that threshold, i.e., $A_{ij}^{(l)} < 0.3$, then the filter is considered inactive, otherwise it is considered active. The intention is to pick a threshold so that filters are active only for the high activations that occur class-wise: a threshold that is between the intra class mean activation and inter class mean activation may work well. The process of picking a threshold may be automated by picking a threshold for each filter $f_j$ to be equal to either $\mu_j$ or $(\mu_j + \sigma_j)$ or $(\mu_j + 2\sigma_j)$ where $\mu_j$ is the spatial mean activation of filter $f_j$ for all images in the test set and $\sigma_j$ its standard deviation, or picking a threshold that is between the intra class mean and inter class mean. In the Road dataset, a threshold of $(\mu_j + \sigma_j)$ has similar results to the global threshold.

Filters with high activation have the most effect on the classification score because of the linear layer followed by softmax after the GAP layer.

**Qualitative Analysis on training from scratch with uniform prior distribution**

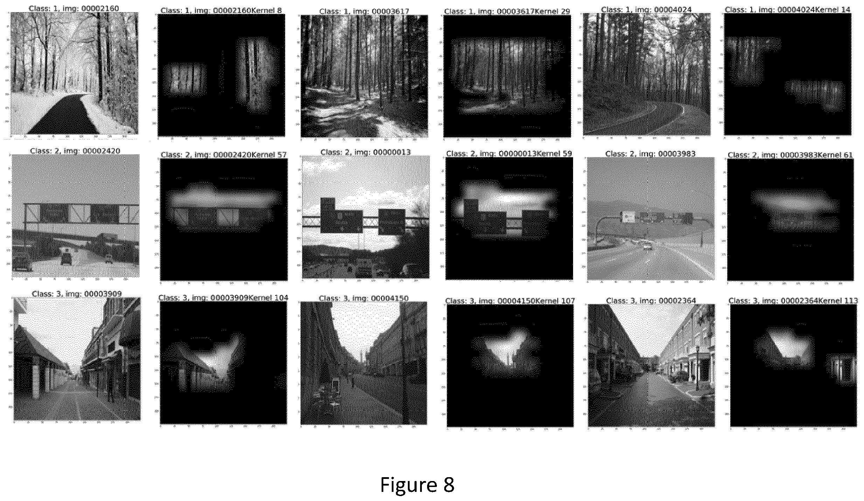

The goal of this qualitative analysis is to assess if filters are clustered (according to the specified prior distribution) after training with Elite-BackProp to fire in response to semantically meaningful and interpretable regions of the input image. Figure 8 illustrates high activations of filters which are trained to highly activate for classes 1,2 and 3 respectively by the specified uniform prior distribution of Figure 6. Figure 8 shows top activations for each filter for the Road dataset (which, as mentioned above, contains 3 classes out of the Places365 dataset). In this Figure some examples may be seen of active filters that fire for each class detecting trees (class 1), traffic signs (class 2) and buildings-sky (class 3). Filters 1-50 fire for objects of class 1 (row 1), filters 51-100 for class 2 (row 2), and filters 101-150 for class 3 (row 3).

The top 10 activation regions of a filter are computed as follows:

**For** each image $X_i$ in test dataset:

- Pass it through CNN and extract activations $A_{ij}^{(l)}$ for each filter $f_j$

- For each filter $f_j$, store the activation of each image in a dictionary: $D[f_j] = \{$ path of $X_i$ : activation $A_{ij}^{(l)}\}$

**End** For
**For** each filter $f_j$:

- Sort the dictionary D with respect to activations and get the top 10 images that highly activate this filter.

  **For** each image in top 10 activations:

  - If the filter activation is below its threshold (e.g. either below the global threshold or below $\mu_j + \sigma_j$ or $\mu_j + 2\sigma_j$) then the filter is considered inactive (black image), otherwise its 7x7 activation map is upscaled to the image resolution 224x224 and each channel in the input image is masked by the activation mask.

- Before multiplying the mask with all channels in the input image, activations that are below the threshold are set to zero and then the values of activation map are scaled in [0,1] by dividing with the spatial maximum activation of the activation map. Then the image multiplied by the activation mask is plotted.

**End For**

### A.1.2. Finetuning with sparse prior distribution

As already mentioned, in "Elite-BackProp with prior distribution" any prior distribution over filter activations that is desired may be used. For example, a sparse prior distribution may be specified, where some filters do not activate at all for all classes and therefore could be pruned after training.

The proposed algorithm Elite-BackProp, with a sparse prior distribution, may also be used for finetuning a pretrained model, to impose more sparse activations. In this case, Elite-Backprop with sparse prior distribution would define an 'Elite' of filters for each class, where the Elite is computed from the activations of the pre-trained model. The 'Elite' of each class stands for the most activated filters for that class and during training all filters outside the 'Elite' will be penalized.

Elite-BackProp with sparse prior distribution may be regarded as a combination of the techniques in "Elite-BackProp with prior distribution" (algorithm I) and "Elite-BackProp topK" (algorithm II), and may be utilized for effectively finetuning existing models while inducing sparsity at the same time.

### Finetuning with Elite-BackProp

As mentioned previously, elements from algorithms I and II may be combined to finetune an existing model using Elite-BackProp with sparse prior distribution. This may be accomplished as follows:

a) Pre-processing step (before training):
For each class c in the training dataset:

- Loop through all images of that class and pass them through the trained model.
- Extract the activations out of the *l*-th convolutional layer where Elite-BackProp will be applied in the future.
- Compute the mean activation of each filter, across all images in the current class.
- Rank the activations and select the top K activations (where K is specified by a user) to form the 'Elite' of filters for the current class.
- Construct the following sparse prior distribution: For each filter $f_j$ assign probability $p_{jc} = 1.0$ if the filter belongs to the 'Elite' of that class, otherwise assign probability $p_{jc} = 0.0$.

b) Finetune with Elite-BackProp with sparse prior distribution:
In this step the previously-defined sparse prior distribution $p_{jc}$ is used, and regularization layer is attached to the l-th convolutional layer of the architecture and trained as usual.

### Quantitative Analysis after Finetuning with sparse prior distribution

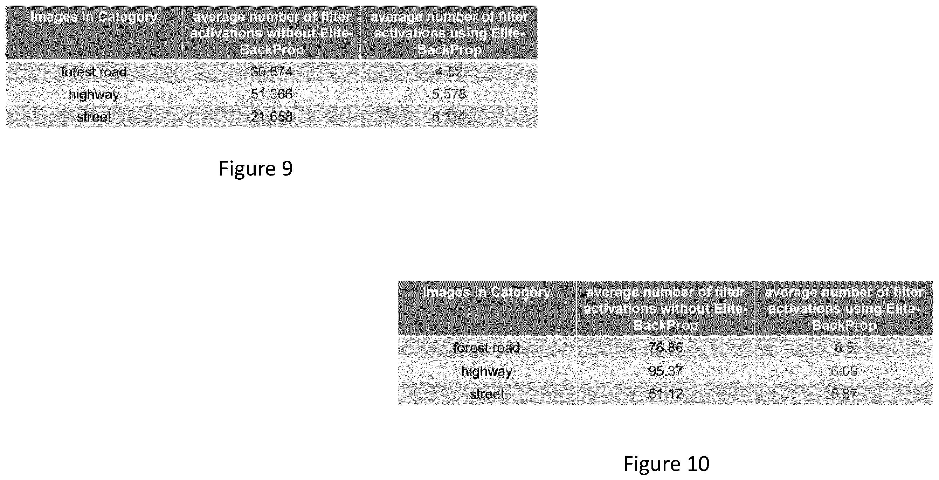

In this section we present quantitative results after training with Elite-BackProp and sparse prior distribution. The tables in Figures 9 and 10 depict the mean filter activations before and after finetuning the VGG16 architecture shown in Figure 22 with Elite-BackProp after the GAP layer.

To construct the sparse prior distribution the steps outlined in the previous section are followed: for each class in the Road dataset, loop through all images of that class and find the top 20 filter activations on average. Afterwards a sparse prior distribution is constructed that assigns to the top 20 filters of each class probability 1.0, and 0.0 probability on all others as described previously.

After finetuning with Elite-BackProp and the constructed sparse prior distribution, the same process as described above in the section "Training from scratch with Uniform prior distribution" section is performed to assess the sparsity in activations: For each class ('forest road', 'highway', 'street'), all images belonging to that class are looped through and all filter activations out of the last convolutional layer are computed. Similarly, for each image a vector of 150 filter activations is obtained.

A filter is considered active if its activation is above the threshold for that filter (as discussed above, it may for example be a global threshold, or $\mu_j$, $(\mu_j + \sigma_j)$ or $(\mu_j + 2\sigma_j)$, or something between intra and inter class mean). In the present example the threshold $\mu_j + \sigma_j$ is used; thus, any filter with activation below that threshold is considered inactive.

For each image, the number of filters having activations above that threshold is computed. For example, for image 1 in class 1 there may be 32 active filters, for image 2 in class 1 there may be 28 active, etc. When all the computations have been done, the mean number of the active filters for all images per class is taken; this is the number reported in the table of Figure 9.

Therefore, for an image in the class 'forest road', on average 30.674 filters are active before applying the Elite-BackProp algorithm, and on average 4.52 filters are active after training with 'Elite-BackProp'. This means that only a few filters are highly activated for each image, making it much easier to explain the classification decision.

In the table of Figure 10 the sparsity is assessed without the use of Global Average Pooling (GAP) layer. This shows that significant benefits from using the proposed Elite-BackProp with sparse prior distribution are obtained, indicating that the sparsity-inducing nature of the proposed method is independent of the GAP layer.

### A.1.3. Quantitative Analysis of Rule Extraction

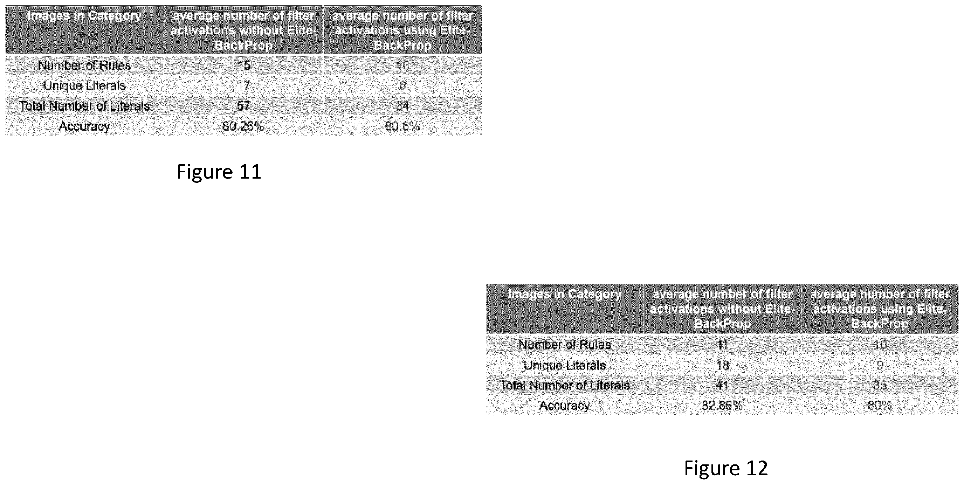

The rule extraction framework proposed in EP3291146A was used to distil the knowledge out of the trained CNN and the number of rules, as well as the classification accuracy of the extracted rules, was measured. The results are depicted in the tables shown in Figures 11 and 12, where it may be seen that use of the Elite-BackProp algorithm is associated with a reduction in the number of rules without any sacrifice in the accuracy (same fidelity). Therefore, use of the Elite-BackProp algorithm may result in more compact representation and boost interpretability, since a smaller number of rules may be more interpretable by humans.

For the architecture shown in Figure 22, which is associated with the sparsity level depicted in Figure 9, the rule extraction analysis is shown in the table of Figure 11.

For the architecture described in Figure 22, without using the GAP layer and associated with the sparsity level depicted in Figure 10, the rule extraction analysis is shown in the table of Figure 12.

From the previous results it seems that for the ROAD dataset global average pooling helps rule extraction when used in conjunction with our regularization. Even without the use of the GAP layer however the proposed regularization results in less unique literals, which equates to simpler representation with very little sacrifice in accuracy.

### B. CUB200-2011 dataset

The CUB200-2011 dataset contains 11.8K images of 200 bird species. Each category contains from 12 up to 33 images (22.4 images on average per category). Since this dataset is very small, extensive augmentation was applied, as described earlier in relation to the Road dataset. The train-validation-test split that was followed was 5696, 1600 and 4493. To standardize the data, for each item the per channel mean was subtracted and it was divided by the per channel standard deviation of images in CUB200.

The architecture shown in Figure 23 was trained on the CUB200-2011 dataset, using the Tensorflow™ deep learning framework (other DL frameworks, such as PyTorch™ or Caffe™, may be used instead) and the following parameters:

- Optimizer: Adam algorithm with learning rate 0.00005, $\beta_1$ = 0.9, $\beta_2$ = 0.999, $\varepsilon$ = 1e-08.
- Learning rate on decay with fraction 0.3 and patience 5 epochs.
- Trained for 100 epochs.
- The regularization layer was attached after the global average pooling and the following uniform prior distribution was defined over the 1000 filter activations:
  { class 1 : [1,2,3,4,5], class 2 : [6,7,8,9,10], ..., class 200 : [996,997,998,999,1000] }
  Therefore, for each class, five disjoint filter activations were specified in the list.
- As mentioned above it was also necessary to apply L2 weight regularization on the layer following the Elite-BackProp (see section 1.3). In this case L2 regularization with reg_val =0.01 was applied.

### B.1. Results after training using Elite-BackProp topK activations

In this section we report quantitative and qualitative results on sparsity of activations and visualize activations regions of filters after training with Elite-BackProp topK activations with K=20 for 100 epochs. The mean test and validation accuracies on the 88th epoch for the architecture of Figure 23 were 46.75% and 48.25% respectively.

### Quantitative Analysis

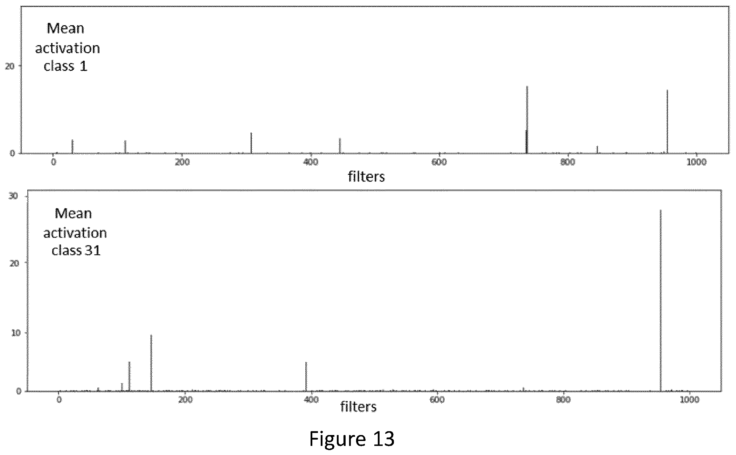

The average filter activations for all images of a given category were measured (as described previously: loop through all images of a specific class, get their activations and then take their average) and their values were plotted as shown in Figure 13.

It may be seen that Elite-BackProp topK introduces big spikes for the filters that are highly active on average for images of class 1. The filters with high activation spikes may be associated with objects of class 1 after visualizing their high activation receptive field in images.

For class 31 big activation spikes on some filters that form the 'Elite' of this class are also clearly seen. Notice that some filters overlap with class 1.

**Qualitative Analysis on training from scratch with Elite-BackProp topK**

Experiments were performed using two different visualization approaches. The first visualization approach is described in the previous section "Qualitative Analysis on training from scratch with uniform prior distribution" for the Road dataset with threshold $\mu_j + \sigma_j$. The second visualization approach is that proposed in D. Bau, B. Zhou, A. Khosla, A. Oliva, and A. Torralba. Network dissection: Quantifying interpretability of deep visual representations. In CVPR, 2017. Both approaches produce similar results in terms of visualizing the important regions of activations.

For completeness, the second visualisation approach of Bau et. al. is described below: For each filter $f_j$, feature maps $F_{ij}$ after ReLu operations (and maxpool if present in the architecture) are computed on different input images $X_i$ on the $l$-th layer where the proposed regularization is applied. Then, the distribution of activation scores in all positions of all feature maps is computed. Later on, an activation threshold $t_{f_j}$ is set such that

$$p\left( \left( F_{ij} \right)_{rs} > t_f \right) = 0.005$$

in order to keep the top activations from all the spatial locations (r, s) of all feature maps $F_{ij}$. Finally, after thresholding the feature map to obtain a binary mask, it is scaled up to match the resolution of input image, the input image is masked and then it is visualized.

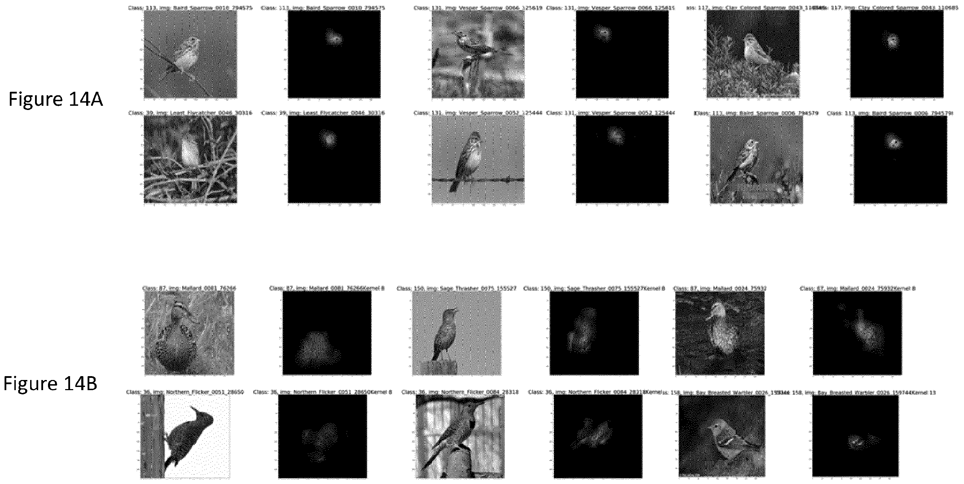

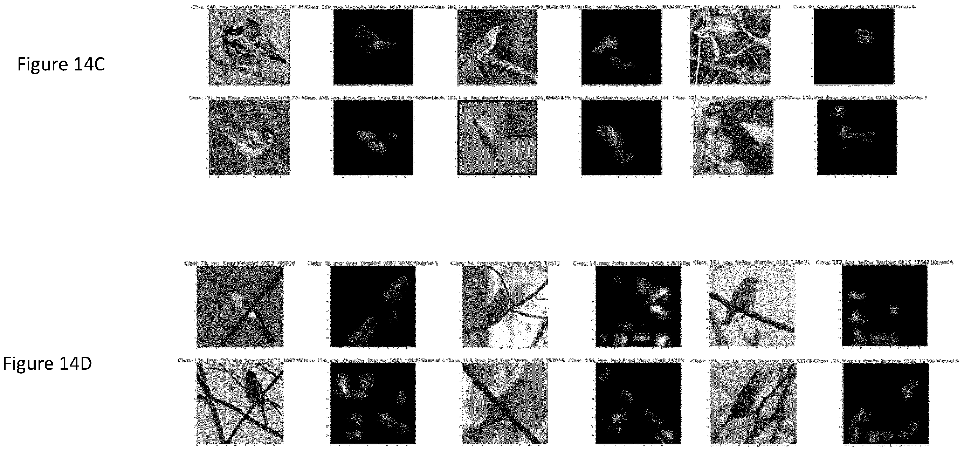

Visualization of high activations in some filters in the CUB200-2011 dataset is shown in Figures 14A to 14D. In the images of Figure 14A the filter detects "head", in the images of Figure 14B the filter detects "body", In the images of Figure 14C the filter detects "wings", and in the images of Figure 14D the filter detects "tree branches". From the visualizations of top activation regions in Figures 14A to 14D it is evident that the filters learned specific object parts or environmental concepts, without the need for object part annotations during training.

In summary, the proposed method is a clustering-based regularization process with the following properties:

(1) Filters are clustered to activate on specific object parts present in one class or multiple classes, and activation regions are small, compact and semantically meaningful.

(2) Filters are clustered taking into account a supervisory signal from the ground truth label for each image to guide the regularization. Filters are penalized differently for each image in the batch according to the ground truth class that the image belongs to.

(3) One embodiment (algorithm I) clusters the filters according to a specified prior distribution over filter activations for each class. Each class may be associated with a prior distribution over filter activations. Filters are trained to converge to that distribution. This clustering encourages filters to fire in response to compact and semantically meaningful regions of the input image and associate with object parts of a specific class or classes. Moreover, the activations regions are small and compact.

(4) Another embodiment (algorithm II) ranks filters in a layer according to the accumulated activations for each class during training. Each class is thereby associated with an 'Elite' group of filters. All filters outside the 'Elite' group will be penalized during backpropagation. This results in sparse representations, and the filters that do not belong to any 'Elite' group may be pruned for efficiency. The 'Elite' group may be constructed, by way of example only, using the top K approach, a threshold, etc..

(5) The functional form of the regularization activity penalty in the loss changes from one iteration to the next. The penalty $R(W_{1:l})$ $\boldsymbol{R(W_{1:l})} = \boldsymbol{F_t(W_{1:l})}$ on algorithms I and II depends also on the iteration. Other previously-proposed approaches use a constant functional form for the penalty, e.g. $L_1 = \|w^{(l)}\|_1$, $L_2 = \|w^{(l)}\|_2$,

$\text{Group Lasso} = \sum_g \sqrt{\sum_i (w_{g,i}^{(l)2})}$, $\text{Exclusive Lasso} = \frac{1}{2} \sum_g \left( \sum_i |w_{g,i}^{(l)}| \right)^2$ and variants of the latter. The weights of course change across different iterations, i.e. the functions are not constant, but the functional form (the type of function used), e.g. sum of squares, sum of absolute values etc., is constant. However, on each iteration the functional form of the penalty proposed in this application changes, because the penalty is a function of the activation out of layer $l$.

The proposed method has the following benefits:

- it enhances the interpretability of machine learning models by encouraging neurons to form clusters that 'fire' in response to specific object parts/concept
- the activation region of neurons is small and compact, and therefore may be associated more easily with object parts
- sparsity in activations is introduced in order to tackle the redundancy problem of the prior art; for example, instead of having different filters for 'tail of cat', 'tail of dog', etc., parsimonious representations are encouraged in order to help train one filter representing the concept 'tail' in general.

Sparsity also has the following advantages:

- it may be combined with pruning of unimportant neurons (those having low magnitude) for speed improvement and memory reduction with minimal loss in accuracy; this may help in porting deep learning algorithms to resource limited portable devices
- annotating the filters after training and linking them to specific object parts is easier due to sparsity (less filters require annotation due to sparsity)
- enhances the performance of rule extraction logic programs; this is due to sparsity and clustering of neurons:

    - less rules are produced which may more compactly capture the semantic information with no loss in accuracy or fidelity
    - less rules are more interpretable by humans

Embodiments may be applied to any area where self-explainable models with interpretable neurons-filters is needed or sparsity in representations is desirable.

After achieving a desired level of sparsity, unnecessary filters/neurons may be pruned to boost speed and reduce memory requirements. This would result in a more compact and lighter DNN model, making it easier to embed it into resource limited portable devices (e.g. mobile devices).

After training with the proposed regularization methods, the filters/neurons will be more interpretable and fire (i.e. have high activation regions) towards meaningful parts/objects of the input image. Afterwards, a labelling process may follow for each filter (which may be either manual or automated) in order to associate every filter with a particular word describing its activation. Essentially, by visualizing the receptive field of high activations of filters across different images one may associate each filter with a word describing its activation. Moreover, a rule extraction logic program may be used after training with the proposed regularization, to distil the knowledge of the interpretable neural model and explain its decisions. Such rule extraction programs take as input the activations of filters from a subset of layers and measure the association with the target output. After thresholding the activation of each filter/neuron, each one of them may be either active or in-active and by creating a decision tree or graph for example, rules are created to explain a particular decision, boosting the interpretability of the underlying representations. This could be very beneficial in domains such as:

- **Healthcare:** To assist doctors in diagnosing diseases from tabular data or images. In many cases doctors need to know the decision-making process of the model and not only the output classification. For example, in detecting tumours or other diseases from images, it will be beneficial to have access to a neural network whose filters 'fire' on semantically meaningful regions of the image that help diagnose if a disease is present. In detecting tumours for example, a filter may fire only towards abnormal morphological objects associated with the presence of a particular type of tumour. Moreover, no ground truth polygon annotations for the tumours locations and shapes are needed during training, making the proposed method easily applicable without the need to obtain segmentation data and without any supervision. One may train for example a binary classifier on tumour/no-tumour images using the proposed regularization term which gives to filters the incentive to cluster towards small and compact regions that discriminate the classes, representing specific object parts. After labelling the filters (either manually or automated) and quantizing their activations a rule extraction logic program may be used to produce rules for each input image of a patient that explain the decision by the neural model. For example, a rule may be as follows: "Since Filter A is active, Filter B is in-active and Filter C is active, the patient has a malignant tumour with probability X%". Therefore, if the filter activity is above a threshold (as described in the proposed method) then the filter detected the presence of a specific shape-colour-object in the image. The probability is easy to produce by having a softmax layer in the CNN output and the uncertainty in estimation may be measured with various methods such as MCMC Dropout. The crucial part is to train CNN filters to be more interpretable in the first place and link them to specific object parts.

• **Autonomous driving:** Autonomous vehicles make decisions about turning, accelerating, braking, stopping etc. based on input images from the environment. In order to boost the trust on decisions made by such systems, it will be beneficial to explain their decision-making process, auditing, assisting semi-autonomous vehicles or for debugging purposes. This may be done by training more interpretable filters in a CNN where each filter (or cluster of filters) may represent (detect) an object part or topic like white stripes in the road, pedestrians or animal crossing road, traffic signals etc. As described earlier, if a filter activity is above a threshold then a specific object part/topic is present in the image. Afterwards, a rule extraction program may be used to distil the knowledge using as inputs the filter activities and target the decisions of CNN. The rule extraction program may produce compact rules due to the induced sparsity in the proposed method that explain the decisions made by the classifier. As example of a rule could be: "Since Filter A is active the vehicle stopped" which could translate to braking due to detecting a red light (if Filter A represents and fires on red lights). The explainability techniques may be applied for example in auditing where an insurance agent might be interested in knowing why a car behaved incorrectly, what caused a crash and who should take responsibility. Moreover, semi-autonomous vehicles may benefit from more interpretable filters making them more robust to unseen environments (boosting generalization capabilities).

• **Transfer Learning:** Filters that represent semantically meaningful concepts or object parts may be used in transfer learning scenario where a machine learning model is trained on one domain and there is the need of applying it to another. As an example a model trained on traffic signs in Europe with Elite-BackProp could encourage filters to detect primitive shapes and objects like circles and triangles in traffic signs in completely unsupervised manner. Later on, this knowledge may be applied in a new domain e.g. traffic signals in another region to detect and interpret traffic signs in the new domain. As already mentioned the sparsity inducing nature of the proposed method means that less filters needs annotation and this results in speed boosts and lower costs for a business because less annotated data are required.

## Transferable Traffic Sign Recognition - Use Case

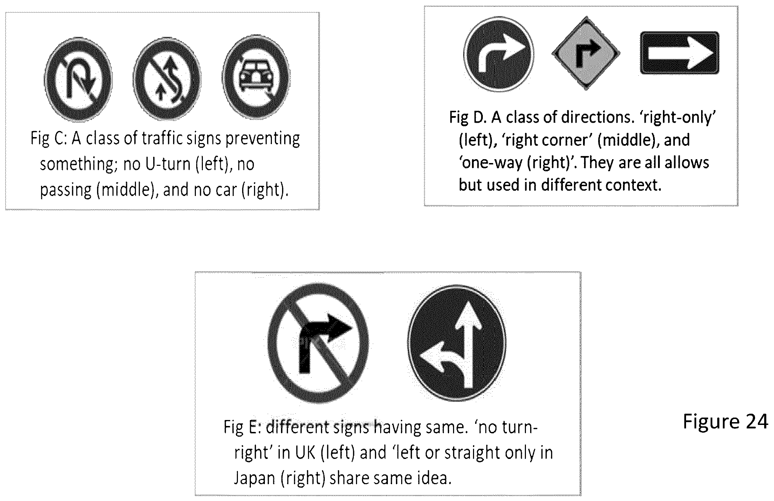

An application of an embodiment to transferable traffic sign recognition will now be explained with reference to Figure 24.

Every country has a set of traffic signs. Individual signs may differ from country to country, but may share a common purpose, e.g. indicating a speed limit, a restriction on direction of travel, a caution to drivers, and so on. Because of this, once people become familiar with traffic signs in one country, they are able to understand the meaning of different signs with the same or similar meaning in other countries. On the other hand, existing image recognition techniques need to be trained on a large volume of traffic sign images for each country, because traffic signs appear in a variety of scenes in different ways including angle, lighting, and occlusion. Despite these difficulties, an image recognition system trained in a human-like way on a set of traffic signs for one country using an embodiment of the proposed method will be able to recognize traffic signs in different countries without training from scratch.

Let us suppose that a neural network is trained by using images of Japanese traffic signs. Fig C and Fig D of Figure 24 present some of these traffic signs. Every sign is the target class to learn. Note that some of the traffic signs share the same purpose. For example, the signs in Fig C show those forbidding something and the signs in Fig D show those allowing right turns.

Fig E of Figure 24 shows traffic signs that forbid a right turn, either in the UK (left) or in Japan (right). As seen in the images, the signs contrast with one another, in the sense that the sign for the UK indicates a prohibited direction and the sign for Japan indicates permitted directions. However, they serve the same purpose, i.e. they restrict the direction of traffic if they appear at an intersection. Japan has nothing like the sign used in the UK, however its traffic signs cover the same concepts such as prohibition and direction. By combining those concepts, the proposed method allows rules to be composed for an image recognition system trained on Japanese traffic signs which allow the system to recognize traffic signs in the UK.

For example, the Elite Back-Prop algorithm, either with prior distribution or top-K, may capture the concept of "prohibit" depicted as a slashed red circle in both signs in Fig C because of its ability to train a kernel activated to a common concept between classes. Similarly, it captures "right arrow" from the signs in Fig D. A rule extraction technique, such as that proposed in EP3291146A for example, may be used to extract a rule set that recognizes Japanese signs. That is, when it is supplied with the images in Fig C and Fig D, one of the rules matches and classifies each correctly. For example, a rule "X $\wedge$ Y ---> no U-turn" classifies the left image in Fig C, where the kernel X represents "prohibit" and Y represents "U-turn". A rule "U $\wedge$ V ---> right only" classifies the left image in Fig D, where the kernel U represents "right arrow" and V represents "blue background". There is no "X $\wedge$ U $\rightarrow$ no turn-right", because no Japanese traffic sign represents "no turn-right" in that way.

A user may manually add a rule "X $\wedge$ U ---> no turn-right" to the rule set when she or he wants the system to recognize "no turn-right" in the UK, without the use of additional training images. However, this rule may instead be created automatically by training the system on a comparatively small set of images for UK traffic signs, containing much fewer images than usually used for training of neural networks, and applying the afore-mentioned rule extraction technique, because the original neural network has been well trained on the common concepts.

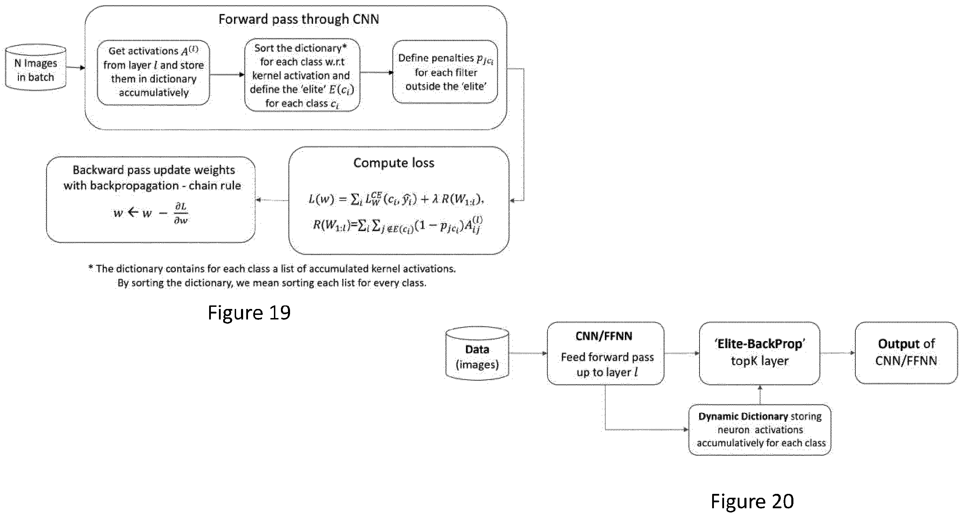

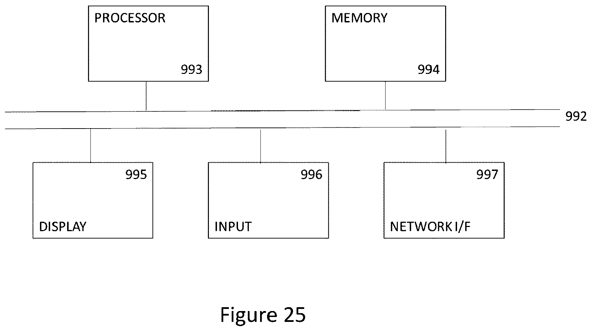

Figure 25 is a block diagram of a computing device, such as a data storage server, which embodies the present invention, and which may be used to implement some or all of the operations of a method embodying the present invention, and perform some or all of the tasks of apparatus of an embodiment. For example, the computing device of Figure 25 may be used to implement all the tasks of Figures 18 and 20 and perform all the operations of the method shown in Figure 1, or only to implement one or more of the processes described with reference to Figures 2, 5, 17 and 19.

The computing device comprises a processor 993 and memory 994, which may for example be configured to perform the tasks of a deep neural network. Optionally, the computing device also includes a network interface 997 for communication with other such computing devices, for example with other computing devices of invention embodiments.

For example, an embodiment may be composed of a network of such computing devices. Optionally, the computing device also includes one or more input mechanisms such as keyboard and mouse 996, and a display unit such as one or more monitors 995. The components are connectable to one another via a bus 992.

The memory 994 may include a computer readable medium, which term may refer to a single medium or multiple media (e.g., a centralized or distributed database and/or associated caches and servers) configured to carry computer-executable instructions or have data structures stored thereon, such as the Road and Cub datasets. Computer-executable instructions may include, for example, instructions and data accessible by and causing a general purpose computer, special purpose computer, or special purpose processing device (e.g., one or more processors) to perform one or more functions or operations. For example, the computer-executable instructions may include those instructions for implementing all the tasks or functions to be performed by each or all of Figures 18 and 20, or performing all the operations of the method of Figure 1, or only to implement one or more of the processes described with reference to Figures 2, 5, 17 and 19. And such instructions may be executed by one or more processor 993. Thus, the term "computer-readable storage medium" may also include any medium that is capable of storing, encoding or carrying a set of instructions for execution by the machine and that cause the machine to perform any one or more of the methods of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM),

Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor 993 is configured to control the computing device and execute processing operations, for example executing computer program code stored in the memory 994 to implement the methods described with reference to Figures 1, 2, 5, 17 and 19 and defined in the claims. The memory 994 stores data being read and written by the processor 993. As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and operations discussed herein.

The display unit 995 may display a representation of data stored by the computing device and may also display a cursor and dialog boxes and screens enabling interaction between a user and the programs and data stored on the computing device. The input mechanisms 996 may enable a user to input data and instructions to the computing device.

The network interface (network I/F) 997 may be connected to a network, such as the Internet, and is connectable to other such computing devices via the network. The network I/F 997 may control data input/output from/to other apparatus via the network. Other peripheral devices such as microphone, speakers, printer, power supply unit, fan, case, scanner, trackerball etc may be included in the computing device.

Methods embodying the present invention may be carried out on a computing device such as that illustrated in Figure 25. Such a computing device need not have every component illustrated in Figure 25, and may be composed of a subset of those components. A method embodying the present invention may be carried out by a single computing device in communication with one or more data storage servers via a network. The computing device may be a data storage itself storing at least a portion of the data.

A method embodying the present invention may be carried out by a plurality of computing devices operating in cooperation with one another. One or more of the plurality of computing devices may be a data storage server storing at least a portion of the data.

The above-described embodiments of the present invention may advantageously be used independently of any other of the embodiments or in any feasible combination with one or more others of the embodiments.

**Brief Description of Technical Terms Used** - **Glossary**

- Post-hoc methods = These are methods that try to explain the decisions made by a trained neural network either locally or globally by approximating the underlying complex model by a surrogate simpler and more interpretable model.
- FFNN = Feed Forward Neural Network
- CNN = Convolutional Neural Network
- GAP = Global Average Pooling layer
- Kernel = $K_1 \times K_2$ matrix that convolves the input image or feature map (depending on the layer)
- The convolution operator is denoted by $*$
- $W_{ij}^{(l)}$ denotes the weight connecting the i-th neuron of layer $l$ - 1 and $j$-th neuron of layer $l$.
- $W^{(l)}$ denotes the collection of all weights (as a matrix) at layer $l$.
- Filter = $K_1 \times K_2 \times C_{l\text{-}1}$ matrix where $C_{l\text{-}1}$ denote the input channels of layer.
- Feature Map = This is a synonym for "activation map" and it is the outcome of the convolution operator ($H_{l\text{-}1} \times W_{l\text{-}1} \times C_{l\text{-}1}$) $* F_i$ for $i$ = 1,2, ... , $C_l$ , $F_i$ denotes a filter of size $K_1 \times K_2 \times C_{l\text{-}1}$ and $C_l$ denotes the total number of filters for layer $l$. The dimension of the output feature map is denoted as $H_l \times W_l \times C_l$.
- Filter activation = the average over absolute values of the feature map after a convolution operator + non-linearity (and after maxpool in some cases). In the case of ReLu non-linearity there is no reason to take absolute values.
- $A_i^{(l)}$ are all the activations of the i-th sample at the $l$-th layer. For a FFNN:

$$A_i^{(l)} = \sigma(W^{(l)}A^{(l-1)} + B^{(l)}),$$

where $W^{(l)}$ and $B^{(l)}$ are the weights and biases for the $l$-th layer, $\sigma$ is the non-linearity (ReLu, tanh, sigmoid..) and $A_i^{(l-1)}$ is the output activation of the previous layer for sample and $X_i = A_i^{(0)}$ is the input image. $A_{ij}^{(l)}$ denotes the activation of the $j$-th neuron for the i-th sample at the $l$-th layer. For a CNN, the activation $A_{ij}^{(l)}$ of filter $f_j^{(l)}$ for the i-th image in the batch at layer $l$ is defined to be the spatial average of activations of $F_{ij}^{(l)}$ (after non-linearity and maxpooling if present), that is

$$A_{ij}^{(l)} = \frac{1}{H_l W_l} \sum_r^{H_l} \sum_s^{W_l} \left( F_{ij}^{(l)} \right)_{rs}$$

where $(\cdot)_{rs}$ stands for the (r, $s$) spatial coordinates (the definition of activation of a feature map is defined as the average of activations, but may be naturally extended to any metric. For example, someone may define the activation in terms of the $L_p$ or $L_{p,q}$ norm of each feature map).

**Claims**

1. A computer-implemented method of training a deep neural network - DNN - to classify images, the method comprising:

    for a batch of N training data X$_i$, where $i$ = 1 to N and c$_i$ is the class of training data X$_i$, carrying out a clustering-based regularization process (S2) at at least one layer $l$ of the DNN having neurons $j$ in order to induce clustering in neuron space, in which process a regularization activity penalty is added to a loss function for the batch of training data which is to be optimized during training;
    **characterised in that**:

the clustering-based regularization process comprises, before adding the regularization activity penalty, obtaining a prior probability distribution over neuron activations for each class, wherein the prior probability distribution is a sparse distribution in which only a low proportion of neurons in the layer I are activated for the class; and

the regularization activity penalty is structured to induce activations of neurons to converge to the prior probability distribution and comprises components associated with respective neurons in the layer, wherein the neuron activations are dependent on the respective classes of the training data.

2. A method as claimed in claim 1, wherein the prior probability distributions of at least some classes intersect.

3. A method as claimed in claim 1 or 2, wherein the clustering-based regularization process further comprises calculating, for each neuron, the component of the regularization activity penalty associated with the neuron, the amount of the component being determined by the probabilities of the neuron activating according to the prior probability distributions $p_{jci}$.

4. A method as claimed in claim 3, wherein the component of the regularization activity penalty is calculated using the formula:

$$\sum_{i=1}^{N}(1 - p_{jc_i})A_{ij}^{(l)}$$

where $A_{ij}^{(l)}$ is the absolute value of the activation of neuron $j$ in layer $l$ for training data X$i$.

5. A method as claimed in any claim 4, wherein the regularization activity penalty R($W_{1:l}$) is calculated using the formula:

$$R(W_{1:l}) = \sum_{i=1}^{N}\sum_{j=1}^{C_l}(1 - p_{jc_i})A_{ij}^{(l)}$$

where $W_{1:l}$ denotes the set of weights from layer 1 up to $l$ and $C_l$ is the number of output channels of layer l.

6. A method as claimed in any one of claims 1 to 3, wherein:
the clustering-based regularization process is iterated for a plurality of batches of training data X$_i$, and the method further comprises, before adding the regularization activity penalty, determining the prior probability distribution for each class at each iteration of the process.

7. A method as claimed in claim 6, wherein determining the prior probability distribution for each class comprises using neuron activations for the class from previous iterations to define the probability distribution.

8. A method as claimed in claim 6 or 7, wherein:
the clustering-based regularization process further comprises using the determined prior probability distribution to identify a group of neurons for which the number of neuron activations for the class meets a predefined criterion.

9. A method as claimed in claim 8, wherein the predefined criterion is at least one of:

whether, when the neurons are ranked according to the number of neuron activations for the class from the prior probability distribution, the neuron is ranked within the top K neurons, where K is an integer;
whether the number of activations of the neuron for the class from the prior probability distribution exceeds a predefined activation threshold.

10. A method as claimed in claim 8 or 9, wherein the regularization activity penalty comprises penalty components calculated for each neuron outside the group but no penalty component for the neurons within the group.

11. A method as claimed in claim 8 or 9, wherein the regularization activity penalty comprises penalty components calculated for each neuron in the layer, the amount of the penalty component for neurons outside the group being greater than for neurons within the group.

12. A method as claimed in claim 11, wherein in the clustering-based regularization process the neurons are ranked according to the number of neuron activations for the class from the prior probability distribution, and the penalty component for each neuron is inversely proportional to the ranking of the neuron.

13. A method as claimed in any preceding claim, further comprising determining saliency of the neurons in the layer and discarding at least one neuron in the layer which is less salient than others in the layer.

14. A computer program comprising instructions which, when executed by a computer, cause the computer to carry out the method of any preceding claim.

15. Apparatus to train a deep neural network - DNN - to classify images, the apparatus comprising at least one processor, and at least one memory to store the DNN, the images to be classified, and instructions to cause the processor to: for a batch of N training data Xi, where i = 1 to N and ci is the class of training data Xi, carry out a clustering-based regularization process at at least one layer I of the DNN having neurons j, in which process a regularization activity penalty is added to a loss function for the batch of training data which is to be optimized during training; **characterised in that**:

the clustering-based regularization process comprises, before adding the regularization activity penalty, obtaining a prior probability distribution over neuron activations for each class, wherein the prior probability distribution is a sparse distribution in which only a low proportion of neurons in the layer I are activated for the class; and the regularization activity penalty is structured to induce activations of neurons to converge to the prior probability distribution and comprises components associated with respective neurons in the layer, wherein the neuron activations are dependent on the respective classes of the training data.

**Patentansprüche**

1. Computerimplementiertes Verfahren zum Trainieren eines tiefen neuronalen Netzes (deep neural network - DNN) zum Klassifizieren von Bildern, wobei das Verfahren umfasst:

für einen Stapel von N Trainingsdaten $X_i$, wobei i = 1 bis N und $c_i$ die Klasse der Trainingsdaten $X_i$ ist, Ausführen eines Clustering-basierten Regularisierungsprozesses (S2) in mindestens einer Schicht $l$ des DNN mit Neuronen j, um ein Clustering im Neuronenraum zu induzieren, wobei in diesem Prozess eine Regularisierungsaktivitätsstrafe zu einer Verlustfunktion für den Stapel von Trainingsdaten hinzugefügt wird, die während des Trainings optimiert werden soll; **dadurch gekennzeichnet, dass**:

der Clustering-basierte Regularisierungsprozess, vor dem Hinzufügen der Regularisierungsaktivitätsstrafe, das Erlangen einer vorherigen Wahrscheinlichkeitsverteilung über Neuronenaktivierungen für jede Klasse umfasst, wobei die vorherige Wahrscheinlichkeitsverteilung eine spärliche Verteilung ist, in der nur ein geringer Anteil von Neuronen in der Schicht $l$ für die Klasse aktiviert wird; und die Regularisierungsaktivitätsstrafe dazu strukturiert ist, Aktivierungen von Neuronen zu induzieren, um zur vorherigen Wahrscheinlichkeitsverteilung zu konvergieren, und Komponenten umfasst, die jeweiligen Neuronen in der Schicht zugeordnet sind, wobei die Neuronenaktivierungen von den jeweiligen Klassen der Trainingsdaten abhängig sind.

2. Verfahren nach Anspruch 1, **dadurch gekennzeichnet, dass** sich die vorherigen Wahrscheinlichkeitsverteilungen zumindest einiger Klassen schneiden.

3. Verfahren nach Anspruch 1 oder 2, wobei der Clustering-basierte Regularisierungsprozess ferner für jedes Neuron das Berechnen der Komponente der Regularisierungsaktivitätsstrafe, die dem Neuron zugeordnet ist, umfasst, wobei der Betrag der Komponente durch die Wahrscheinlichkeiten der Neuronenaktivierung gemäß den vorherigen Wahrscheinlichkeitsverteilungen $p_{jci}$ bestimmt wird.

4. Verfahren nach Anspruch 3, wobei die Komponente der Regularisierungsaktivitätsstrafe unter Verwendung der folgenden Formel berechnet wird:

$$\sum_{i=1}^{N}(1 - p_{jc_i})A_{ij}^{(l)}$$

wobei $A_{ij}^{(l)}$ der Absolutwert der Aktivierung des Neurons $j$ in Schicht $l$ für Trainingsdaten Xi ist.

5. Verfahren nach Anspruch 4, wobei die Regularisierungsaktivitätsstrafe R($W_{1:l}$) unter Verwendung der folgenden Formel berechnet wird:

$$R(W_{1:l}) = \sum_{i=1}^{N} \sum_{j=1}^{C_l} (1 - p_{jc_i})A_{ij}^{(l)}$$

wobei $W_{1:l}$ den Satz von Gewichten von Schicht 1 bis/und $C_l$ die Anzahl der Ausgangskanäle der Schicht l bezeichnet.

6. Verfahren nach einem der Ansprüche 1 bis 3, wobei:
der Clustering-basierte Regularisierungsprozess für eine Vielzahl von Stapeln von Trainingsdaten $X_i$ iteriert wird und das Verfahren ferner, vor dem Hinzufügen der Regularisierungsaktivitätsstrafe, das Bestimmen der vorherigen Wahrscheinlichkeitsverteilung für jede Klasse bei jeder Iteration des Prozesses umfasst.

7. Verfahren nach Anspruch 6, wobei das Bestimmen der vorherigen Wahrscheinlichkeitsverteilung für jede Klasse das Verwenden von Neuronenaktivierungen für die Klasse aus vorherigen Iterationen umfasst, um die Wahrscheinlichkeitsverteilung zu definieren.

8. Verfahren nach Anspruch 6 oder 7, wobei:
der Clustering-basierte Regularisierungsprozess ferner das Verwenden der bestimmten vorherigen Wahrscheinlichkeitsverteilung umfasst, um eine Gruppe von Neuronen zu identifizieren, für welche die Anzahl von Neuronenaktivierungen für die Klasse ein vordefiniertes Kriterium erfüllt.

9. Verfahren nach Anspruch 8, wobei das vordefinierte Kriterium mindestens eines von Folgendem ist:

ob, wenn die Neuronen nach der Anzahl der Neuronenaktivierungen für die Klasse aus der vorherigen Wahrscheinlichkeitsverteilung eingestuft werden, das Neuron innerhalb der obersten K Neuronen eingestuft wird, wobei K eine ganze Zahl ist;
ob die Anzahl der Aktivierungen des Neurons für die Klasse aus der vorherigen Wahrscheinlichkeitsverteilung einen vorgegebenen Aktivierungsschwellenwert überschreitet.

10. Verfahren nach Anspruch 8 oder 9, wobei die Regularisierungsaktivitätsstrafe Strafkomponenten umfasst, die für jedes Neuron außerhalb der Gruppe berechnet werden, aber keine Strafkomponente für die Neuronen innerhalb der Gruppe.

11. Verfahren nach Anspruch 8 oder 9, wobei die Regularisierungsaktivitätsstrafe Strafkomponenten umfasst, die für jedes Neuron in der Schicht berechnet werden, wobei der Betrag der Strafkomponente für Neuronen außerhalb der Gruppe größer ist als für Neuronen innerhalb der Gruppe.

12. Verfahren nach Anspruch 11, wobei in dem Clustering-basierten Regularisierungsprozess die Neuronen entsprechend der Anzahl von Neuronenaktivierungen für die Klasse aus der vorherigen Wahrscheinlichkeitsverteilung eingestuft werden und die Strafkomponente für jedes Neuron umgekehrt proportional zur Einstufung des Neurons ist.

13. Verfahren nach einem der vorhergehenden Ansprüche, ferner umfassend das Bestimmen der Ausprägung der Neuronen in der Schicht und das Verwerfen mindestens eines Neurons in der Schicht, das weniger ausgeprägt ist als andere in der Schicht.

14. Computerprogramm, das Anweisungen umfasst, die, wenn sie durch einen Computer ausgeführt werden, den Computer dazu veranlassen, das Verfahren nach einem der vorhergehenden Ansprüche durchzuführen.

**15.** Vorrichtung zum Trainieren eines tiefen neuronalen Netzes (DNN) zum Klassifizieren von Bildern, wobei die Vorrichtung mindestens einen Prozessor und mindestens einen Speicher zum Speichern des DNN, der zu klassifizierenden Bilder und Anweisungen umfasst, um den Prozessor zu Folgendem zu veranlassen: für einen Stapel von N Trainingsdaten Xi, wobei i = 1 bis N und ci die Klasse der Trainingsdaten Xi ist, Durchführen eines Clustering-basierten Regularisierungsprozesses in mindestens einer Schicht I des DNN mit Neuronen j, wobei in diesem Prozess eine Regularisierungsaktivitätsstrafe zu einer Verlustfunktion für den Stapel von Trainingsdaten hinzugefügt wird, die während des Trainings optimiert werden soll;
**dadurch gekennzeichnet, dass**:

der Clustering-basierte Regularisierungsprozess vor dem Hinzufügen der Regularisierungsaktivitätsstrafe das Erlangen einer vorherigen Wahrscheinlichkeitsverteilung über Neuronenaktivierungen für jede Klasse umfasst, wobei die vorhergehende Wahrscheinlichkeitsverteilung eine spärliche Verteilung ist, bei der für die Klasse nur ein geringer Anteil an Neuronen in der Schicht *I* aktiviert wird; und
die Regularisierungsaktivitätsstrafe dazu strukturiert ist, Aktivierungen von Neuronen zur vorherigen Wahrscheinlichkeitsverteilung zu konvergieren und Komponenten umfasst, die jeweiligen Neuronen in der Schicht zugeordnet sind, wobei die Neuronenaktivierungen von den jeweiligen Klassen der Trainingsdaten abhängig sind.

## Revendications

**1.** Procédé mis en oeuvre par ordinateur de formation d'un réseau neuronal profond (DNN) pour classer des images, le procédé comprenant :

pour un lot de N données d'apprentissage $X_i$, où *i* = 1 à N et $c_i$ est la classe de données d'apprentissage $X_i$, la réalisation d'un processus de régularisation basé sur un partitionnement (S2) au niveau d'au moins une couche *I* du DNN ayant des neurones *j* afin d'induire un partitionnement dans l'espace neuronal, processus dans lequel une pénalité d'activité de régularisation est ajoutée à une fonction de perte pour le lot de données d'apprentissage qui doit être optimisé pendant la formation ;
**caractérisé en ce que** :

le processus de régularisation basé sur un partitionnement comprend, avant l'ajout de la pénalité d'activité de régularisation, l'obtention d'une distribution de probabilité préalable sur des activations de neurones pour chaque classe, dans lequel la distribution de probabilité préalable est une distribution clairsemée dans laquelle seule une faible proportion de neurones dans la couche *I* sont activés pour la classe ; et
la pénalité d'activité de régularisation est structurée pour induire des activations de neurones pour converger vers la distribution de probabilité préalable et comprend des composantes associées à des neurones respectifs dans la couche, dans lequel les activations de neurones dépendent des classes respectives des données d'apprentissage.

**2.** Procédé selon la revendication 1, dans lequel les distributions de probabilité préalables d'au moins certaines classes se croisent.

**3.** Procédé selon la revendication 1 ou 2, dans lequel le processus de régularisation basé sur un partitionnement comprend en outre le calcul, pour chaque neurone, de la composante de la pénalité d'activité de régularisation associé au neurone, la quantité de la composante étant déterminée par les probabilités d'activation de neurones selon les distributions de probabilité préalables $p_{jci}$.

**4.** Procédé selon la revendication 3, dans lequel la composante de la pénalité d'activité de régularisation est calculée selon la formule :

$$\sum_{i=1}^{N}(1 - p_{jc_i})A_{ij}^{(l)}$$

où $A_{ij}^{(l)}$ est la valeur absolue de l'activation de neurones j dans la couche I pour les données d'apprentissage X*i*.

5. Procédé selon l'une quelconque revendication 4, dans lequel la pénalité d'activité de régularisation R($W_{1:l}$) est calculée selon la formule :

$$R(W_{1:l}) = \sum_{i=1}^{N} \sum_{j=1}^{C_i} (1 - p_{jc_i}) A_{ij}^{(l)}$$

où $W_{1:l}$ désigne l'ensemble des poids de la couche 1 jusqu'à l et $C_l$ est le nombre de canaux de sortie de la couche l.

6. Procédé selon l'une quelconque des revendications 1 à 3, dans lequel :
le processus de régularisation basé sur un partitionnement est itéré pour une pluralité de lots de données d'apprentissage $X_i$, et le procédé comprend en outre, avant l'ajout de la pénalité d'activité de régularisation, la détermination de la distribution de probabilité préalable pour chaque classe à chaque itération du processus.

7. Procédé selon la revendication 6, dans lequel la détermination de la distribution de probabilité préalable pour chaque classe comprend l'utilisation d'activations de neurones pour la classe à partir d'itérations antérieures pour définir la distribution de probabilité.

8. Procédé selon la revendication 6 ou 7, dans lequel :
le processus de régularisation basé sur un partitionnement comprend en outre l'utilisation de la distribution de probabilité préalable déterminée pour identifier un groupe de neurones pour lequel le nombre d'activations de neurones pour la classe satisfait un critère prédéfini.

9. Procédé selon la revendication 8, dans lequel le critère prédéfini est au moins l'un de :

si, lorsque les neurones sont classés en fonction du nombre d'activations de neurones pour la classe de la distribution de probabilité préalable, le neurone est classé dans les K neurones supérieurs, où K est un entier ;
si le nombre d'activations du neurone pour la classe à partir de la distribution de probabilité préalable dépasse un seuil d'activation prédéfini.

10. Procédé selon la revendication 8 ou 9, dans lequel la pénalité d'activité de régularisation comprend des composantes de pénalité calculées pour chaque neurone extérieur au groupe mais pas de composante de pénalité pour les neurones à l'intérieur du groupe.

11. Procédé selon la revendication 8 ou 9, dans lequel la pénalité d'activité de régularisation comprend des composantes de pénalité calculées pour chaque neurone dans la couche, la quantité de la composante de pénalité pour des neurones extérieurs au groupe étant supérieure à celle pour des neurones à l'intérieur du groupe.

12. Procédé selon la revendication 11, dans lequel, dans le processus de régularisation basé sur un partitionnement, les neurones sont classés en fonction du nombre d'activations de neurones pour la classe à partir de la distribution de probabilité préalable, et la composante de pénalité pour chaque neurone est inversement proportionnelle au classement du neurone.

13. Procédé selon une quelconque revendication précédente, comprenant en outre la détermination de la saillance des neurones dans la couche et l'élimination d'au moins un neurone dans la couche qui est moins saillant que d'autres dans la couche.

14. Programme informatique comprenant des instructions qui, lorsqu'elles sont exécutées par un ordinateur, amènent l'ordinateur à mettre en oeuvre le procédé selon une quelconque revendication précédente.

15. Appareil de formation d'un réseau neuronal profond (DNN) pour classer des images, l'appareil comprenant au moins un processeur, et au moins une mémoire pour stocker le DNN, les images à classer, et des instructions pour amener le processeur à : pour un lot de N données d'apprentissage Xi, où i = 1 à N et ci est la classe de données d'apprentissage Xi, effectuer un processus de régularisation basé sur un partitionnement au niveau d'au moins une couche l du DNN ayant des neurones j, processus dans lequel une pénalité d'activité de régularisation est ajoutée à une fonction de perte pour le lot de données d'apprentissage qui doit être optimisé pendant la formation ;
**caractérisé en ce que** :

le processus de régularisation basé sur un partitionnement comprend, avant l'ajout de la pénalité d'activité de régularisation, l'obtention d'une distribution de probabilité préalable sur les activations de neurones pour chaque classe, dans lequel la distribution de probabilité préalable est une distribution clairsemée dans laquelle seule une faible proportion de neurones dans la couche I sont activés pour la classe ; et

la pénalité d'activité de régularisation est structurée pour induire des activations de neurones pour converger vers la distribution de probabilité préalable et comprend des composantes associées à des neurones respectifs dans la couche, dans lequel les activations de neurones dépendent des classes respectives des données d'apprentissage.

S1: Select which layer(s) $L_m$ (m = $m_1$, ...$m_n$) of the DNN are to be regularized and hyper-parameter(s) $\lambda_m$ to be used in a clustering-based regularization process

S2: Carry out the clustering-based regularization process at selected layer(s) of a DNN using a regularization activity penalty comprising components associated with respective neurons in the layer which are dependent on the respective classes of the training data

END

Figure 1

EP 3 965 021 B1

Figure 2

Figure 3B

Figure 3A

Figure 5

Figure 4

Figure 6

Figure 7

□ Class 1 mean filter activations

□ Class 2 mean filter activations

□ Class 3 mean filter activations

□ Mean filter activations across all classes

Figure 8

| Images in Category | average number of filter activations without Elite-BackProp | average number of filter activations using Elite-BackProp |
|---|---|---|
| forest road | 30.674 | 4.52 |
| highway | 51.366 | 5.578 |
| street | 21.658 | 6.114 |

Figure 9

EP 3 965 021 B1

| Images in Category | average number of filter activations without Elite-BackProp | average number of filter activations using Elite-BackProp |
|---|---|---|
| forest road | 76.86 | 6.5 |
| highway | 95.37 | 6.09 |
| street | 51.12 | 6.87 |

Figure 10

| Images in Category | average number of filter activations without Elite-BackProp | average number of filter activations using Elite-BackProp |
|---|---|---|
| Number of Rules | 15 | 10 |
| Unique Literals | 17 | 6 |
| Total Number of Literals | 57 | 34 |
| Accuracy | 80.26% | 80.6% |

Figure 11

| Images in Category | average number of filter activations without Elite-BackProp | average number of filter activations using Elite-BackProp |
|---|---|---|
| Number of Rules | 11 | 10 |
| Unique Literals | 18 | 9 |
| Total Number of Literals | 41 | 35 |
| Accuracy | 82.86% | 80% |

Figure 12

Figure 13

Figure 14A

Figure 14B

Figure 14C

Figure 14D

37

Figure 15

Figure 17

Figure 18

Figure 16

**Forward pass through CNN**

N Images in batch

Get activations $A^{(l)}$ from layer $l$ and store them in dictionary accumulatively

Sort the dictionary* for each class w.r.t kernel activation and define the 'elite' $E(c_i)$ for each class $c_i$

Define penalties $p_{jc_i}$ for each filter outside the 'elite'

**Compute loss**

$$L(w) = \sum_i L_W^{CE}(c_i, \hat{y}_i) + \lambda\, R(W_{1:l}),$$

$$R(W_{1:l}) = \sum_i \sum_{j \notin E(c_i)} (1 - p_{jc_i}) A_{ij}^{(l)}$$

Backward pass update weights with backpropagation - chain rule

$$w \leftarrow w - \frac{\partial L}{\partial w}$$

\* The dictionary contains for each class a list of accumulated kernel activations.
By sorting the dictionary, we mean sorting each list for every class.

Figure 19

Data (images)

**CNN/FFNN**
Feed forward pass up to layer $l$

**'Elite-BackProp'** topK layer

**Output** of CNN/FFNN

**Dynamic Dictionary** storing neuron activations accumulatively for each class

Figure 20

Figure 21A

Figure 21B

## Figure 22

```
input
224x224x3
   │
   ▼
64 x conv 3x3
(1,1) padding
   │
   ▼
64 x conv 3x3
(1,1) padding
   │
   ▼
(2,2) max pool
   │
   ▼
128 x conv 3x3
(1,1) padding
   │
   ▼
128 x conv 3x3
(1,1) padding
   │
   ▼
(2,2) max pool

128 x conv 3x3
(1,1) padding
   │
   ▼
128 x conv 3x3
(1,1) padding
   │
   ▼
128 x conv 3x3
(1,1) padding
   │
   ▼
(2,2) max pool
   │
   ▼
150 x conv 3x3
(1,1) padding
   │
   ▼
150 x conv 3x3
(1,1) padding

150 x conv 3x3
(1,1) padding
   │
   ▼
Global Average
Pooling
   │
   ▼
Elite
BackProp
   │
   ▼
3 output
```

## Figure 23

```
input
224x224x3
   │
   ▼
64 x conv 3x3
(1,1) padding
   │
   ▼
64 x conv 3x3
(1,1) padding
   │
   ▼
(2,2) max pool
   │
   ▼
128 x conv 3x3
(1,1) padding
   │
   ▼
128 x conv 3x3
(1,1) padding
   │
   ▼
(2,2) max pool

256 x conv 3x3
(1,1) padding
   │
   ▼
256 x conv 3x3
(1,1) padding
   │
   ▼
512 x conv 3x3
(1,1) padding
   │
   ▼
(2,2) max pool
   │
   ▼
512 x conv 3x3
(1,1) padding
   │
   ▼
1000 x conv 3x3
(1,1) padding

(2,2) max pool
   │
   ▼
Global Average
Pooling
   │
   ▼
Elite-BackProp
   │
   ▼
200 output
```

Fig C: A class of traffic signs preventing something; no U-turn (left), no passing (middle), and no car (right).

Fig D. A class of directions. 'right-only' (left), 'right corner' (middle), and 'one-way (right)'. They are all allows but used in different context.

Fig E: different signs having same. 'no turn-right' in UK (left) and 'left or straight only in Japan (right) share same idea.

Figure 24

EP 3 965 021 B1

Figure 25

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2019392323 A1

- EP 3291146 A

**Non-patent literature cited in the description**

- Improving Interpretability and Regularization in Deep Learning. **CHUNYANG WU et al.** IEEE/ACM TRANSACTIONS ON AUDIO, SPEECH, AND LANGUAGE PROCESSING. IEEE, 01 February 2018, vol. 26, 256-5 265
- Regularizing activations in neural networks via distribution matching with the Wasserstein metric. **TAE-JONG JOO et al.** ARXIV.ORG. OLIN LIBRARY CORNELL UNIVERSITY, 13 February 2020
- Joint Regularization on Activations and Weights for Efficient Neural Network Pruning. **YANG QING et al.** 2019 18TH IEEE INTERNATIONAL CONFERENCE ON MACHINE LEARNING AND APPLICATIONS (ICMLA). IEEE, 16 December 2019, 790-797

- **ZHOU, B. ; LAPEDRIZA, A. ; KHOSLA, A. ; OLIVA, A. ; TORRALBA, A.** Places: A 10 million image database for scene recognition. *IEEE Trans. Pattern Anal. Mach. Intell.,* 2018, vol. 40, 1452-1464
- **C. WAH ; S. BRANSON ; P. WELINDER ; P. PERONA ; S. BELONGIE.** *The caltech-ucsd birds-200-2011 dataset,* 2011
- **D. BAU ; B. ZHOU ; A. KHOSLA ; A. OLIVA ; A. TORRALBA.** Network dissection: Quantifying interpretability of deep visual representations. *CVPR,* 2017